(19) Europäisches Patentamt
European Patent Office
Office européen des brevets

(11) **EP 3 693 324 A1**

(12) **DEMANDE DE BREVET EUROPEEN**

(43) Date de publication:
**12.08.2020 Bulletin 2020/33**

(51) Int Cl.:
***B66D 3/08*** *(2006.01)*   ***A63J 1/02*** *(2006.01)*
***F16G 1/28*** *(2006.01)*   ***B66D 1/20*** *(2006.01)*
***B66D 1/60*** *(2006.01)*   ***D07B 1/14*** *(2006.01)*
***B66D 1/74*** *(2006.01)*

(21) Numéro de dépôt: **20155861.6**

(22) Date de dépôt: **06.02.2020**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **06.02.2019 CH 1352019**

(71) Demandeur: **CEP Technique SA
2854 Bassecourt (CH)**

(72) Inventeur: **Willemin, Marcel
2854 Bassecourt (CH)**

(74) Mandataire: **P&TS SA (AG, Ltd.)
Avenue J.-J. Rousseau 4
P.O. Box 2848
2001 Neuchâtel (CH)**

(54) **PALAN ÉLECTRIQUE À COURROIES SYNCHRONES**

(57)    Treuil scénique à courroies crantées dont le poids et l'encombrement sont réduits grâce à l'utilisation de plusieurs poulies de traction disposées en série. Treuil comprenant en outre un dévidoir permettant d'organiser les courroies crantées lors de la traction de charge. Courroies adaptées à la traction de charge par le treuil objet de l'invention, comportant un conducteur électrique pouvant être raccordé à des connecteurs électriques.

Figure 3b

EP 3 693 324 A1

## Description

Domaine technique

La présente invention concerne un treuil scénique compact. Elle concerne en particulier un treuil électrique à courroie, permettant en plus d'associer à la courroie de traction un ou plusieurs conducteurs électriques.

Etat de la technique

Un treuil électrique utilise la force d'un moteur électrique couplé à un réducteur pour adapter la vitesse de rotation du moteur à la vitesse de traction souhaitée. Sur l'arbre de sortie du réducteur est monté une bobine ou un tambour sur lequel s'enroule l'élément de traction qui peut être un câble, une chaîne, une sangle ou une courroie crantée. La capacité d'enroulement de la bobine ou du tambour limite la longueur de l'élément de traction. Le treuil électrique est installé sur une infrastructure fixe, le cas échéant sur un véhicule.

Dans l'art antérieur, le brevet EP 2 625 131 décrit un palan électrique à courroie crantée. La courroie est entraînée par une roue également crantée. Pour maintenir la courroie sur la roue dans la zone d'enroulement, des galets de guidage pressent la courroie contre la roue. L'invention décrit également une bobine sur laquelle est enroulée la courroie. Un ressort de torsion ou un entraînement à glissement permet de maintenir la tension de la courroie.

Le brevet DE 196 13 037 concerne un treuil scénique électrique transportable. Deux courroies crantées fonctionnent parallèlement. Elles sont entraînées par des poulies crantées sur chacune desquelles s'appuient deux galets lisses pour assurer un bon enroulement des courroies. Les extrémités des courroies sont attachées à un dispositif de levage qui comprend un pesage, un détecteur d'inclinaison et une commande d'ouverture de l'organe de préhension ainsi que des alertes visuelles en cas de disfonctionnement. Les courroies crantées comportent des brins en acier utilisées pour transmettre et recevoir les commandes électriques en relation avec le dispositif de levage. Il est aussi possible de détecter l'endommagement ou la rupture des courroies. Les poulies crantées sont actionnées par un moteur et un réducteur approprié. En amont de celles-ci se trouvent des bobines d'enroulement des courroies. La tension dans les courroies est assurée par un embrayage à friction raccordé au moteur et par une roue libre activés suivant le sens de rotation du moteur. Les extrémités des brins d'acier des courroies sont raccordées à des charbons glissants sur des pistes reliées à une source de courant à basse tension et à un bloc de commande électronique.

Le brevet EP 2 157 334 concerne un dispositif de déplacement linéaire d'une coulisse servant de support à des pinces électriques. La courroie crantée est entraînée par un banc d'une machine industrielle. Des brins en cuivre sont insérés dans la courroie. Les deux extrémités de la courroie sont fixées sur la coulisse et reliées à une prise électrique. Un courant électrique alternatif est mis en forme et raccordé à une bobine inductive fixée sur le banc et enserrant la courroie crantée. Le courant induit dans la courroie est prélevé sur la prise de la coulisse et utilisé pour l'actionnement et la commande des pinces électriques. Le circuit électrique primaire permet également de contrôler l'état de la courroie crantée.

L'invention telle que revendiquée ici a pour but d'améliorer les caractéristiques d'un treuil électrique en élargissant ses possibilités d'utilisation non seulement par la réduction de son encombrement et de son poids, mais également par la vitesse et la précision du déplacement de la courroie de traction, tout en permettant la transmission de courant basse tension et/ou haute tension jusqu'au lieu de préhension de la charge. De plus, l'utilisation de courroies crantées en matière synthétique réduit fortement le bruit par rapport à d'autres éléments de traction. Le caractère polyvalent de l'invention tient dans le fait que le treuil objet de l'invention peut être placé dans plusieurs positions, qu'il peut tirer plusieurs courroies en même temps, horizontalement ou verticalement et qu'il peut les emmagasiner tout en laissant les extrémités libres pour être raccordées à des prises électriques. En effet, le treuil scénique a été pensé pour que l'élément de traction, par exemple la courroie crantée soit pourvue d'au moins un conducteur électrique, de préférence deux : un premier conducteur à basse tension, par exemple un câble Ethernet et un second comportant des brins de cuivre pour conduire du courant à haute tension. La forme d'exécution décrite ci-après est un treuil scénique à courroies crantées. La transmission de l'effort de traction d'une courroie à la poulie s'effectue par l'intermédiaire des dents qui s'emboitent dans les creux de la poulie. Comme ces dents sont en matière synthétique, il faut qu'un minimum de dents soit en contact avec la poulie pour tirer la charge sans dommage. Cette caractéristique conduit à dimensionner la poulie d'entraînement suffisamment grande pour garantir un fonctionnement sûr du treuil, ce qui entraîne un encombrement et un poids plus important.

La présente invention a pour objectif principal de réduire l'encombrement du treuil.

Bref résumé de l'invention

Le treuil scénique selon la présente invention comprend des supports, disposés verticalement et reposant sur le sol. Ces supports facilitent son déplacement dans divers lieux. Le treuil scénique comprend un premier axe d'entrainement disposé horizontalement entre les supports et muni d'une première poulie d'entrainement et d'un moyen de traction entrainé par la première poulie d'entrainement. Ce treuil comprend en outre un second axe d'entrainement muni d'une seconde poulie d'entrainement. Le premier et le second axes d'entrainement sont synchronisés, de manière à ce que le moyen de traction soit entraîné à la fois par la première poulie d'entrainement et la seconde poulie d'entrainement.

Le premier axe d'entrainement et le second axe d'entrainement sont synchronisés à l'aide d'une première poulie de transmission, disposée sur le premier axe d'entrainement, d'une seconde poulie de transmission disposée sur le second axe d'entrainement en vis-à-vis de la première poulie de transmission et d'un moyen de transmission intermédiaire relié à la première poulie de transmission et à la seconde poulie de transmission.

Le moyen d'entrainement peut être par exemple une courroie crantée coopérant avec la surface dentée de la première et de la seconde poulies d'entrainement. D'autres types d'entrainement peuvent néanmoins être envisagés.

Le moyen de transmission intermédiaire peut également être une courroie crantée coopérant avec les dents des première et seconde poulies de transmission.

Bien que le premier axe d'entrainement puisse être entrainé à la main, il est de préférence entrainé par un moteur électrique fixé aux supports du treuil.

De manière avantageuse, le treuil selon la présente invention comprend un troisième axe, parallèle au premier axe d'entrainement et au second axe d'entrainement, et comportant un tendeur lisse dédié au réglage et à la tension du moyen d'entrainement.

Le treuil de la présente invention est adapté pour entrainer plus d'un moyen de traction en parallèle. Il peut par exemple entrainer simultanément 2, 3, 4 ou plus de moyens de traction de manière simultanée. Pour ce faire, plusieurs poulies d'entrainement sont disposées en parallèle sur le premier axe d'entrainement et autant de poulies d'entrainement sont disposées en parallèle sur le second axe d'entrainement. Le troisième axe comporte autant de tendeurs. Les poulies de chaque axe peuvent être remplacées par une seule poulie de largeur suffisante pour recevoir l'ensemble des moyens de traction.

Selon un autre aspect, le treuil peut en outre comprendre un dispositif de sécurité. Ce dispositif est applicable au treuil quelles qu'en soient les autres caractéristiques et peut être combiné avec un ou plusieurs des autres aspects du treuil décrits ici. Un tel dispositif peut comprendre un axe de sécurité, libre en rotation, disposé parallèlement au second axe d'entrainement et fixé par ses extrémités aux supports du treuil. L'axe de sécurité comporte des galets, ou des surépaisseurs, disposés en vis-à-vis des bords de la seconde poulie d'entrainement du second axe d'entrainement, ou des secondes poulies d'entrainement, à une distance telle que l'axe de sécurité ne se trouve entrainé que lorsque le moyen d'entraînement déborde sur l'un des bords de la poulie d'entrainement. La distance entre les galets et la poulie d'entrainement correspond en effet à l'épaisseur du moyen d'entrainement. Lorsque celui-ci déborde de sa poulie d'entrainement, il vient au contact du galet de l'axe de sécurité et le met en mouvement. Un détecteur disposé en contact avec l'une des extrémités de l'axe de sécurité permet alors de détecter la mise en rotation de l'axe de sécurité par le moyen d'entrainement décalé. Cet axe peut être dimensionné pour tenir la courroie sur la poulie de traction et empêcher la courroie de quitter la totalité de la denture. La détection de la rotation de l'axe de sécurité par le détecteur peut conduire à l'arrêt de l'alimentation du moteur, à la création d'un signal d'alarme et/ou à d'autres événements.

Selon un mode particulier de réalisation de l'invention, un ou plusieurs des moyens de traction du treuil sont associés à un ou plusieurs conducteurs électriques, ou comprennent un conducteur électrique. Un tel conducteur électrique peut être branché à une source électrique à l'une de ses extrémités et à un dispositif électrique à son extrémité opposée.

Indépendamment des autres aspects de la présente invention, le treuil peut en outre comprendre un dévidoir. Un tel dévidoir est applicable au treuil quelles qu'en soient les autres caractéristiques et peut être combiné avec un ou plusieurs des autres aspects du treuil décrits ici. Le dévidoir est de préférence fixé sur les supports du treuil. Un tel dévidoir peut comporter un premier jeu de poulies montées libres en rotation sur un axe support et un second jeu de poulies entrainées par un axe relai parallèle à l'axe support. Les poulies du premier jeu de poulies sont conçues pour accueillir le moyen de traction qui forme alors plusieurs boucles de repli, et peuvent être entraînées en rotation par le second jeu de poulies grâce à des moyens de transmission. En l'occurrence, les poulies du premier jeu de poulies peuvent chacune être entrainées par une courroie de transmission reliée à chacune des poulies du second jeu de poulies. Pour ce faire, elles comportent chacune une zone en contact avec le moyen de traction et une zone en contact avec une des courroies de transmission. L'axe relai est entraîné en rotation par le second axe d'entrainement du treuil. Les poulies entraînées par l'axe relai ont des diamètres différents les unes des autres alors que les poulies montées libres en rotation et qui supportent le moyen de traction sur l'axe support ont toutes le même diamètre.

De préférence le treuil selon l'invention comporte un jeu de 4 poulies dont le diamètre de chaque poulie est réduit par rapport à celui de la poulie contiguë, de manière à ce que la vitesse linéaire de chaque poulie soit réduite d'un quart par rapport à la vitesse linéaire de la poulie précédente. Il y a autant de jeux de poulies que de moyens de traction actionnés par le treuil.

La présente invention a pour objet également une courroie crantée incluant un ou plusieurs conducteurs de courant. De tels conducteurs incluent les conducteurs de courant de force et de courant de signaux. La courroie crantée sert alors de moyen de traction en même temps que de conducteur électrique. A cet effet, elle comprend un ou plusieurs conducteurs électriques, un moyen de branchement à une source électrique, disposé à l'une de ses extrémités, un moyen de connexion électrique disposée à son extrémité opposée, et pouvant être connectée à un dispositif électrique, et un moyen d'attache à une charge à lever. Une telle courroie est donc ouverte, c'est-à-dire non circulaire, de telle manière que leurs extrémités peuvent être connectées à des objets distincts. Une telle courroie de traction est avantageusement exploitée avec un treuil muni d'un dévidoir tel que décrit ici.

Selon un arrangement applicable quel que soit les autres aspects du treuil, le moyen de traction peut comprendre plusieurs brins métalliques, faisant office de conducteurs électriques, et permettant de surveiller l'intégrité du moyen de traction, notamment grâce aux variations des propriétés électriques des brins métalliques.

L'invention est décrite plus en détails ci-dessous à l'aide des schémas.

## Brève description des figures

- Figure 1 : détail des rapports de diamètres des poulies de l'invention par rapport à celui d'une poulie unique.

- Figures 2a : vue en coupe latérale du treuil selon l'invention.

- Figure 2b : vue en 3D d'une partie du treuil selon l'invention.

- Figure 2c : vue en coupe latérale du treuil selon l'invention sans courroie de transmission.

- Figure 3b : vue en 3D du treuil selon l'invention suivant un premier angle de vue.

- Figure 3c : vue en 3D du treuil selon l'invention suivant un autre angle de vue.

- Figure 4a : vue en coupe latérale du treuil selon l'invention avec dévidoir

- Figure 4b : vue de dessus en 3D du treuil selon l'invention avec dévidoir.

- Figure 5 : vue en 3D du treuil selon l'invention avec dispositif de sécurité.

- Figure 6 : vue de profil d'un ensemble treuil et perche selon l'arrangement à boucle alignées.

- Figure 7a : vue de profil de l'ensemble treuil et perche selon un arrangement de l'invention.

- Figure 7b : vue de profil de l'ensemble treuil et perche selon un autre arrangement de l'invention

- Figures 7c, 7d : vue de l'ensemble treuil et perche selon un autre arrangement de l'invention

- Figure 7e, 7f : vue de l'ensemble treuil et perche selon un autre arrangement de l'invention.

- Figures 7g, 7h : vue de l'ensemble treuil et perche selon un autre arrangement de l'invention.

- Figures 7i, 7j : vue de l'ensemble treuil et perche selon un autre arrangement de l'invention.

- Figure 8 : vue schématique d'une courroie combinée à deux câbles conducteurs, selon un arrangement de l'invention.

- Figure 9 : Vue en 3D d'une poulie dont la surface de roulement comporte plusieurs zones.

- Figures 9a, 9b : représentation schématique d'une poulie du dévidoir selon deux modes de réalisation de l'invention.

- Figure 10 : Vue schématique de la courroie de traction pourvue de câbles électriques.

- Figure 11 : vue de l'ensemble treuil et perche selon un autre arrangement de l'invention.

- Figure 11a : vue de l'ensemble treuil et perche selon un autre arrangement de l'invention.

## Exemple(s) de mode de réalisation de l'invention

Le treuil scénique (1) objet de la présente invention comporte deux premières poulies d'entrainement (21-1) et (21-2), disposées sur un premier axe d'entrainement (14), et deux secondes poulies d'entrainement (20-1) et (20-2), disposées sur un second axe d'entrainement (24). Le diamètre D1 des premières et des secondes poulies d'entrainement est inférieur au diamètre D requis dans le cas où le treuil ne comporterait qu'une seule poulie d'entrainement disposée sur un seul axe d'entrainement. Le diamètre D doit être compris comme un diamètre théorique répondant aux performances requises du treuil scénique. Réduire le couple et par conséquent le dimensionnement du moteur électrique s'accompagne en contrepartie d'une plus faible surface de contact entre la courroie de traction (72) et sa poulie d'entrainement. Il peut en résulter une perte d'efficacité de la transmission, voire des risques d'usure ou de dégradation du treuil (1). Dans le cas où la courroie (72) d'entrainement est une courroie crantée, le nombre de dents disposées sur la poulie d'entrainement doit être suffisent pour préserver l'intégrité des dents d'entrainement. Dans le cas d'une courroie striée ou lisse, la surface de contact avec la poulie d'entrainement doit rester suffisante pour éviter tout glissement ou perte d'adhérence.

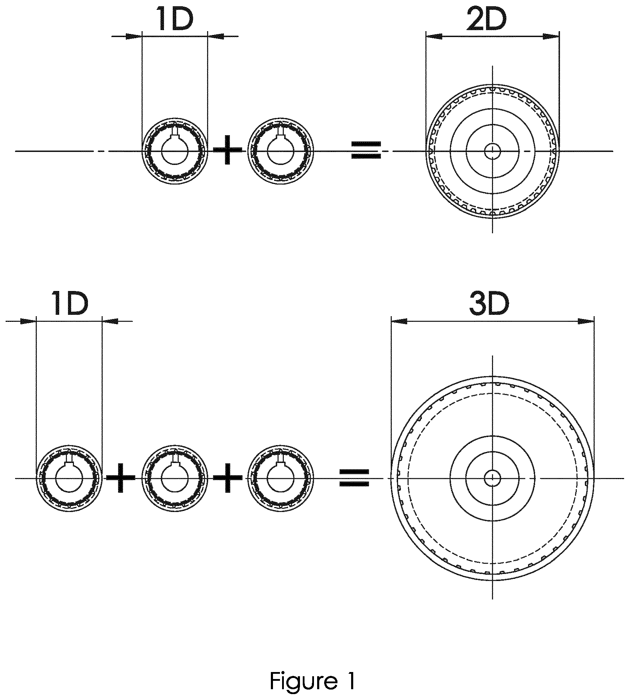

La figure 1 illustre l'équivalence entre les poulies d'entrainement relatives à la présente invention et une poulie unique théorique. Dans un jeu de poulies d'entrainement comprenant une première poulie d'entrainement (21-1) et une seconde poulie d'entrainement (20-1), les diamètres D1 de la première poulie d'entrainement (21-1) et de la seconde poulie d'entrainement (20-1) équivalent chacun à la moitié du diamètre théorique D2. Dans le cas de trois poulies d'entrainement, leur diamètre D1 équivaut au tiers du diamètre théorique D3. Les poulies d'entrainement disposées en série sur des axes d'entrainement distincts entrainent une courroie de traction (72). Chacune des courroies de traction (72) du treuil scénique est ainsi entraînée par un jeu de plusieurs poulies d'entrainement.

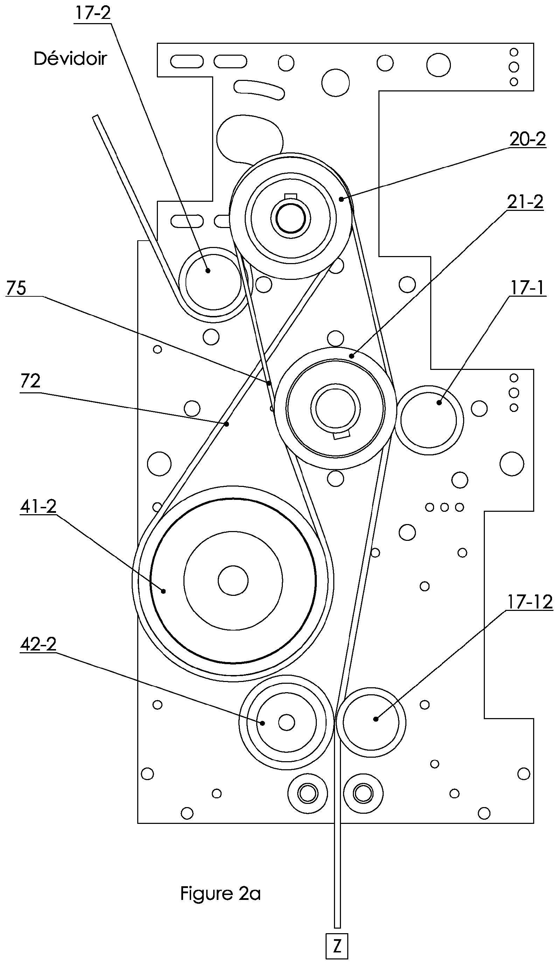

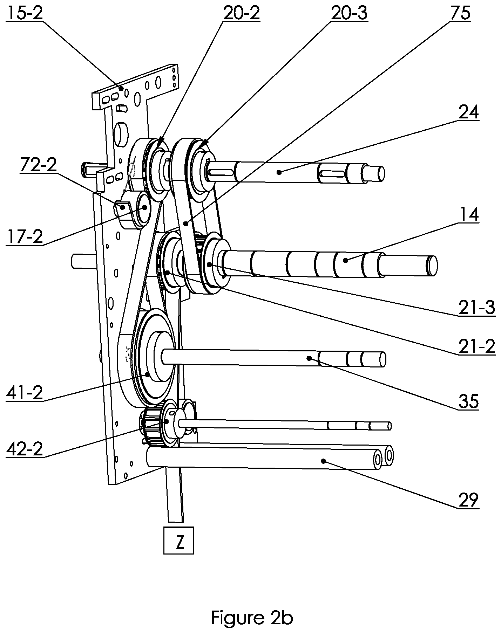

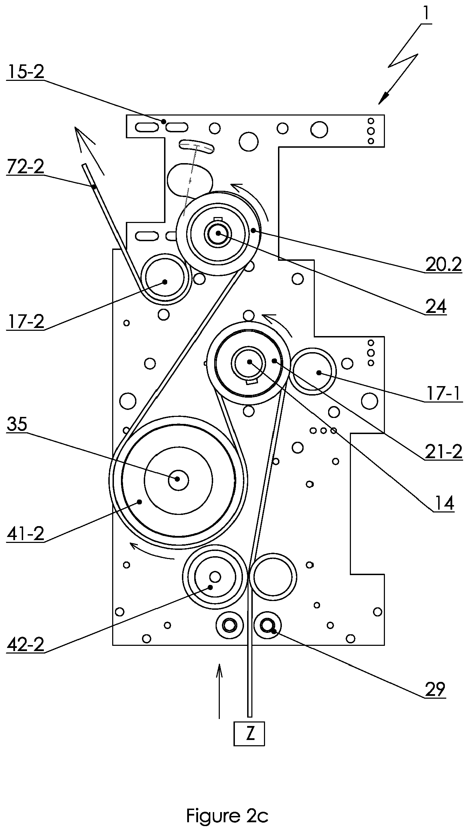

Les figures 2a, 2b, et 2c montrent une disposition des courroies de traction (72-2) et (72-1) selon l'invention. Selon cette disposition, deux courroies de traction (72-2) et (72-1) sont utilisées. Dans le sens de la descente de la charge (Z) à tracter, les courroies de traction (72-1) et (72-2) passent sur un premier jeu de galets d'appui (17-2) qui les pressent sur les premières poulies d'entraînement (20-2, (20-1). Les courroies de traction (72-1) et (72-2) sont ensuite dirigées sur un jeu de tendeurs lisses, éventuellement réglable (41-2) et (41-1), disposés sur un axe libre (35), avant de s'enrouler sur les secondes poulies d'entrainement (21-2) et (21-1). Les tendeurs lisses (41-2) et (41-1) ont pour tâche d'assurer un enroulement optimal des courroies de traction (72-2) et (72-1) sur les premières (20-2) et (20-1) et secondes poulies d'entraînement (21-2 et 21-1). Un deuxième jeu de galets d'appui (17-1) maintien les courroies de traction (72-2) et (72-1) serrées contre les secondes poulies d'entraînements (21-2) et (21-1). Les courroies de traction (72-2) et (72-1) sont ensuite dirigées vers deux paires formées chacune d'une poulie de guidage (42-2), pouvant être crantée, et d'un galet d'appui (17-12). De là, les courroies de traction (72-2) et (72-1) rejoignent le dispositif de préhension de la charge (Z). Le réglage de la tension des tendeurs lisses (41-2) et (41-1) peut se faire soit lors du montage du treuil (1), soit au moyen d'un dispositif connu de réglage permanent de la tension d'une courroie.

Les premières poulies d'entraînement (20-2) et (20-1) et les secondes poulies d'entraînement (21-2) et (21-1), de petites dimensions, ont un impact direct sur le dimensionnement du treuil et la vitesse de déplacement de la courroie de traction (72) correspondante. Ainsi, les premières poulies d'entraînement (20-2) et (20-1), synchronisées avec les secondes poulies d'entraînement (21-2) et (21-1), ont un couple deux fois plus faible qu'une seule poulie de diamètre double. Par contre, elles auront la même force de traction, puisqu'entre les deux, elles auront le même nombre de dents actives pour tirer la charge, ou bien la même surface de contact avec la courroie de traction (72) correspondante. Pour avoir la même vitesse de traction, elles doivent tourner deux fois plus vite qu'une poulie de diamètre double. Cependant le réducteur accouplé au moteur aura un rapport deux fois plus petit qu'avec la poulie de diamètre double, ce qui implique que sa taille sera réduite d'environ deux fois.

Selon un aspect avantageux de l'invention, le premier axe d'entrainement (14), le second axe d'entrainement (24) et le troisième axe libre en rotation (35), sont disposés l'un parallèle à l'autre, de telle manière que le premier axe d'entrainement (14) se trouve entre le second axe d'entrainement (24) et le troisième axe (35), et décalé par rapport au plan formé par le second axe d'entrainement (24) et le troisième axe (35), ce qui permet un arrangement compact des axes d'entrainement.

Dans le cas présent les premières poulies d'entrainement (20-2) et (20-1) sont de même diamètre que les secondes poulies d'entrainement (21-2) et (21-1). Il n'est cependant pas exclu que les diamètres respectifs des premières poulies d'entrainement (20-2) et (20-1) et des secondes poulies d'entrainement (21-2) et (21-1) soient différents pour autant qu'elles restent synchronisées. Les poulies de transmission (20-3) et (21-3) peuvent dans ce cas présenter des diamètres non identiques et produire un rapport de découplage tout en maintenant la synchronisation des poulies d'entrainement. Il est cependant à noter que les poulies d'entrainement d'un même axe d'entrainement doivent avoir le même diamètre et/ou le même nombre de dents, de manière à ce que les courroies de tractions correspondantes soient activées à la même vitesse.

Une autre conséquence directe du diamètre réduit des poulies d'entrainement est la dimension du frein de sécurité (12) qui doit, selon la réglementation, obligatoirement être placé sur l'axe des poulies d'entrainement, autrement dit sur le premier axe d'entrainement (14). Comme le couple sur les poulies d'entrainement est deux fois plus faible, un frein de même efficacité qu'avec une poulie de diamètre double sera deux fois moins lourd et moins grand.

La figure 2b est une illustration en 3D du principe de l'invention et la figure 2c montre le même principe en 2D sans la courroie de transmission (75-3) pour en faciliter la compréhension.

Les éléments précités démontrent ainsi que l'invention permet de réduire le poids et l'encombrement d'un treuil électrique mais également d'augmenter la vitesse et la précision du déplacement de la courroie de traction (72). Ces caractéristiques prennent toute leur importance suivant le lieu, par exemple dans le cadre d'une scène, où les treuils sont parfois installés à des hauteurs importantes à l'intérieur de structures métalliques.

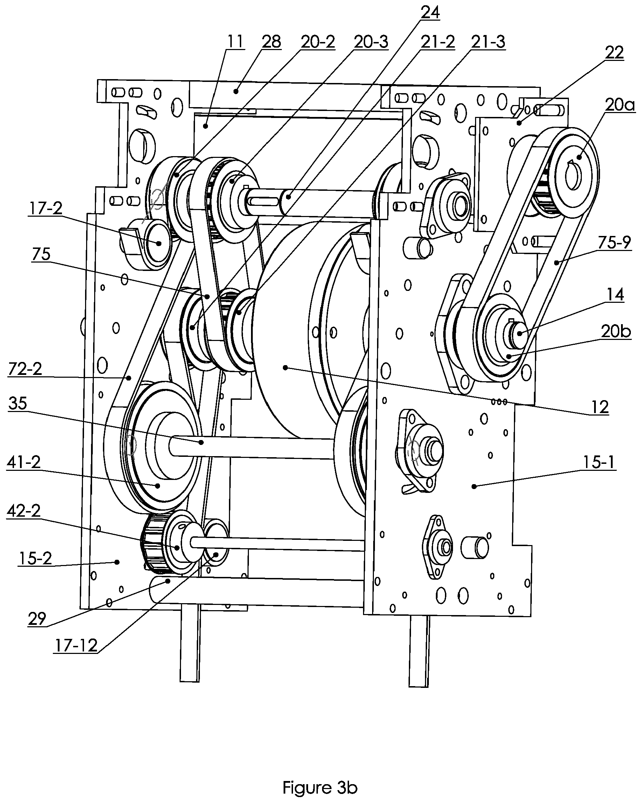

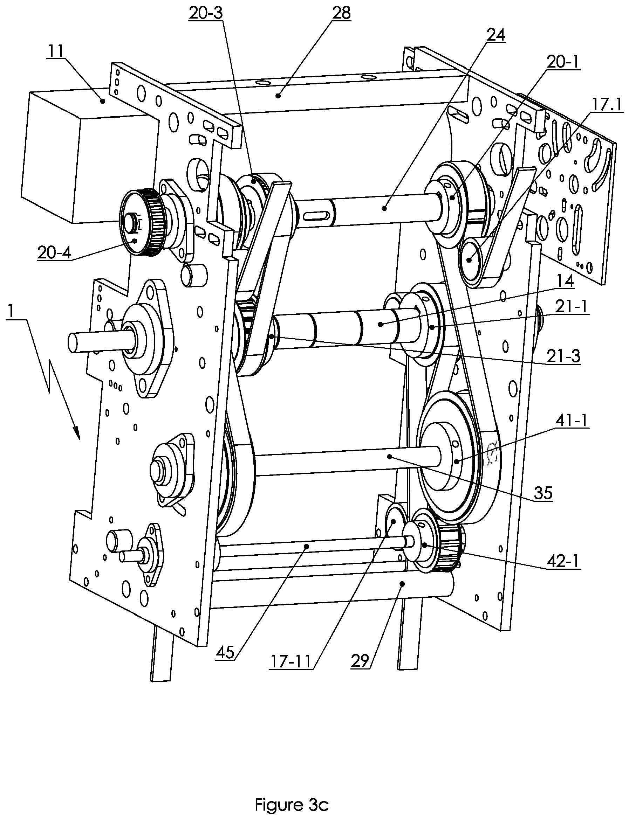

Les figures 3b et 3c sont deux vues d'un treuil scénique selon un mode de réalisation de l'invention. Dans ce cas, les courroies de traction (72-1) et (72-2) sont deux courroies crantées et les premières poulies d'entrainement (20-2) et (20-1) et les secondes poulies d'entraînement (21-1) et (21-2) comportent des dents complémentaires des crans des courroies de traction (72-2) et (72-1). L'armature, ou la structure du treuil, est constituée de deux supports (15-1 et 15-2) reliés par des entretoises (28 et 29). Entre les deux supports se trouvent deux jeux de poulies dentées servant à l'entraîne-

ment des deux courroies crantées (72-2) et (72-1). Les règlements sur la sécurité des personnes exigent en effet que les organes vitaux soient doublés lorsque du personnel peut se trouver sous la charge (Z) durant un déplacement, ce qui justifie que deux courroies de traction soient utilisées en parallèle. Dans le cadre de ces règlements, les deux poulies en séries (21-1 et 20-1 pour la courroie 72-1) (21-2 et 20-2 pour la courroie 72-2) représentent également un avantage. Un moteur (11) et un réducteur sont fixés sur le support (15-1) par l'intermédiaire d'un support-moteur (22). Un entraînement fait de deux poulies (20a et 20b) et d'une première courroie d'entrainement (75-9), pouvant être crantée, relient l'axe du moteur au premier axe d'entraînement (14). Sur cet axe est placé le frein de sécurité (12) et trois poulies crantées. Une d'entre elles est une poulie de transmission menante (21-3). Les deux autres sont les premières poulies d'entraînement (21-1 et 21-2) des courroies de traction (72). Deux poulies tendeurs lisses (41-1 et 41-2) sont fixées sur l'axe (35). Les courroies de traction (72) passent des premières poulies d'entraînement (21-1 et 21-2) sur les poulies tendeurs (41-1 et 41-2) pour rejoindre les deuxièmes poulies d'entraînement (20-1 et 20-2) fixées sur le deuxième axe d'entraînement (24). Sur cet axe se trouve une poulie de transmission menée (20-3) placée en regard de la poulie de transmission menante (21-3) fixée sur le premier axe (14). Les poulies de transmission menées (20-3) et menante (21-3) sont reliées par une courroie de transmission intermédiaire (75-2), pouvant être crantée, qui est ajustée pour une parfaite synchronisation de mouvement du premier axe d'entrainement (14) et du second axe d'entrainement (24). Une des extrémités de chacune des courroies de traction (72-2) et (72-3) est guidée par deux poulies crantées de guidage (42-1 et 42-2) en direction de la charge à tirer (Z). Ces poulies sont fixées sur un axe (45) sur lequel elles sont libres en rotation. Deux galets d'appui de guidage (17-11 et 17-12) pressent les courroies de traction (72-2) et (72-1) sur les poulies respectives. Ces extrémités de courroies sont reliées à un dispositif de préhension de charge, tel qu'un crochet par exemple.

Selon un arrangement avantageux, la ou les poulies tendeurs (41-1, 41-2) sont disposées à une distance des premières poulies d'entrainement (21-1, 21-2) correspondante inférieure à l'épaisseur de la courroie de traction (72-2). De la sorte, les poulies tendeurs (41-1, 41-2), en plus de maintenir la tension des courroies de traction (72-2), les empêchent de ripper sur la surface crantée des poulies d'entraînement (21-1, 21-2). Ainsi, même en cas de défaillance dans la synchronisation des axes d'entrainement (24, 14), les dents de la courroie d'entrainement (72-2) restent associées aux crans de la poulie correspondante. Pour éviter toute perte de contrôle, les poulies tendeurs (41-1, 41-2) sont fixées aux supports (15-1 et 15-2) de sorte à ne pas pouvoir s'éloigner des poulies d'entraînement (21-1, 21-2). Cette disposition particulière permet en toute circonstance d'assurer le freinage des courroies de traction (72) par le frein de sécurité (12) disposé sur le même axe d'entraînement (14). Les courroies de traction peuvent rester détendues de part et d'autre des poulies d'entraînement (21-1, 21-2) sans risque de chevauchement, de ripage ou de glissement. Cette disposition est donc particulièrement avantageuse pour les installations mobiles.

Selon un aspect particulier de l'invention, une ou plusieurs des courroies de traction (72-2) et (72-1) peuvent être accompagnées de conducteurs électriques ou êtres elles-mêmes conductrices. Dans ce cas, un dénudage approprié par extraction d'une dent de la courroie de traction (72) ou par un système de borne guillotine ou par contact à ressort grâce auquel il n'est plus nécessaire de dénuder, permet de raccorder lesdites extrémités de courroie de traction (72-2) et (72-1) ou les conducteurs qui leurs sont associés, à des prises électriques. Les courroies de traction (72-2) et (72-1) peuvent ainsi être indépendamment connectées à des organes électriques divers. Un conducteur électrique peut être par exemple un câble d'alimentation d'un appareil électrique, tel qu'un câble plat ou tressé (90). Il peut alternativement être un câble dédié au courant faible tel que qu'un câble de commande, un câble USB, un câble ethernet ou internet, ou équivalent. Le câble est alors de préférence disposé le long d'un des côtés de la courroie de transmission (72). Il peut être collé, soudé, extrudé ou simplement juxtaposé à la courroie de traction (72). Les poulies qui sont en contact avec la courroie de traction (72) peuvent avoir une largeur adaptée de telle manière que le câble électrique puisse reposer sur sa surface d'enroulement. Le câble électrique et la courroie de traction qui lui est associée peuvent être disposés dans une gaine qui les maintient contigus sur toute leur longueur.

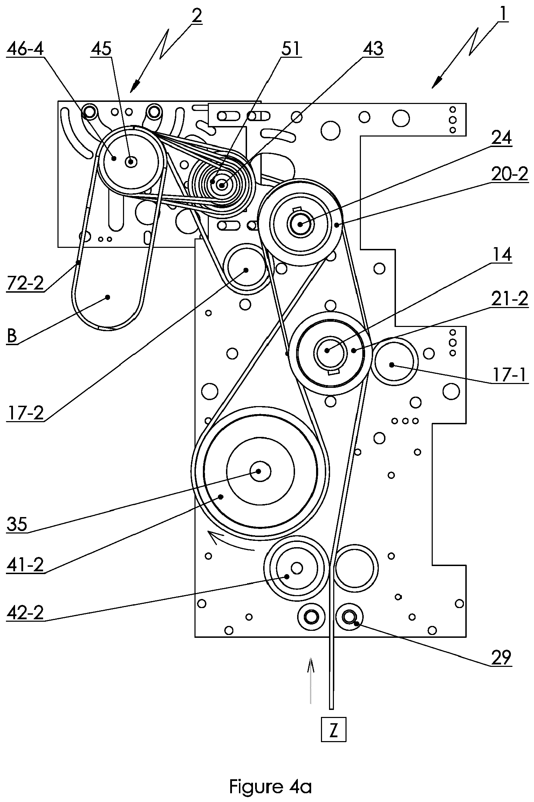

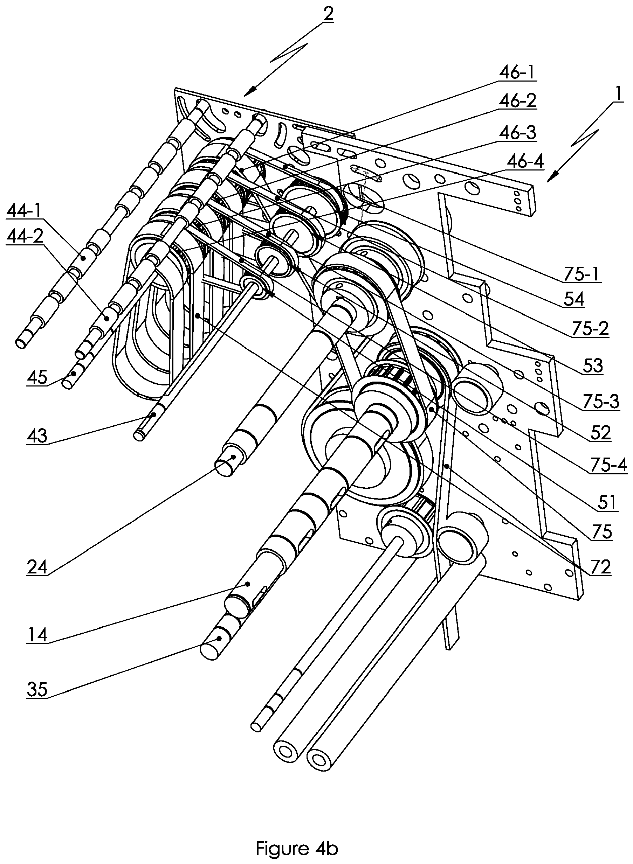

Selon un mode de réalisation privilégié de l'invention, le treuil scénique (1) comporte un dévidoir ou magasin (2), permettant de stocker l'extrémité des courroies de traction (72-2) et (72-1) opposée à celle qui est reliée à la charge à lever. Un tel dévidoir (2) est de préférence fixé aux supports (15-1) et (15-2) du treuil de manière à produire un décrochement. Les boucles formées par les courroies de traction (72) sont alors libres de pendre en dehors du treuil (1) ou peuvent être guidées dans un ensemble de poulies. Elles forment un réservoir accueillant le surplus de courroie de traction (72) lors de la remontée des charges (Z). Dans le sens de la traction, après le passage des premières poulies d'entrainement (20-1) et (20-2) et des secondes poulies d'entrainement (21-1) et (21-2), les deux courroies de traction (72-2) et (72-1) sont orientées vers un tel dévidoir (Figures 4a, 4b), lequel peut avoir plusieurs formes d'exécution.

Selon un mode de réalisation privilégié, le dévidoir (2) peut être un dispositif « à boucles latérales », comme représenté par les schémas 4a et 4b. les courroies de traction (72-2) et (72-1) sont chacune prises en charge par un premier train de poulies tournant librement sur un axe (45), par exemple quatre poulies pour chaque jeu (46-1 à 46-4), toutes identiques. Un second train de poulies, dites poulies-pilotes (51, 52, 53, 54), fixé sur un axe d'entrainement du dévidoir (43) parallèle à l'axe (45), est actionné par une transmission appropriée reliée au deuxième axe d'entraînement (24) du treuil (1). Une courroie de transmission (75-1), (75-2), (75-3) (75-4) relie chaque poulie-pilote (51), (52), (53), (54) à sa poulie correspondante sur le premier train de poulies libres (46-1 à 46-4). Chaque courroie de transmission (75-1 à 75-4) vient se positionner à côté de la courroie de traction (72), sur chacune des poulies (46-1), (46-2), (46-3) (46-4). Les diamètres des quatre poulies-pilotes de chaque jeu sont tous différents, de manière à ce que les vitesses des poulies du dévidoir (2) répondent à la formule suivante :

$$Vn = \frac{m-(n-1)}{m}Vp$$

où : Vp = vitesse du treuil

Vn = vitesse de la poulie « n »

m = nombre de poulies

n = numéro de la poulie

Par exemple, dans le cas de la présente forme d'exécution où il y a quatre poulies de dévidoir dans chaque jeu, soit m = 4, on aura :

$$V1 = Vp$$

$$V2 = \frac{4-1}{4}Vp$$

$$V3 = \frac{4-2}{4}Vp$$

$$V4 = \frac{4-3}{4}Vp$$

Ce qui signifie que la vitesse linéaire de la première poulie (51) est égale à la vitesse de traction du treuil (1). La vitesse de la deuxième poulie (52) du magasin est égale aux trois quarts de la vitesse précédente ; pour la troisième poulie (53), ce sera égal à la moitié de la vitesse de traction du treuil (1) et pour la quatrième poulie (54) du dévidoir, la vitesse linéaire ne sera plus qu'un quart de la vitesse initiale. En d'autres termes, chaque poulie a un diamètre réduit par rapport à la poulie précédente, considérant la première poulie comme celle étant directement reliée au second axe d'entrainement (24) du treuil (1), de telle manière que sa vitesse linéaire soit réduite d'un quart par rapport à la poulie précédente. Lors du montage du treuil, la courroie de traction (72) sera introduite sur la première poulie (46-1) montée libre en rotation sur l'axe support (45) du dévidoir (2) qui a la vitesse de traction de la charge. La courroie de traction (72) sera alors réintroduite sur la deuxième poulie (46-2) et avancera alors aux trois quarts de la vitesse de traction du treuil (1) et ainsi de suite jusqu'à la quatrième poulie (46-4). Lorsque les poulies d'entraînement (21-1), (21-2), (20-1), (20-2), seront actionnées dans le sens de la traction de la charge (Z), les deux courroies de traction (72-2), (72-1) formeront une boucle (B) après le passage sur chaque poulie (46-1 à 46-4) du dévidoir (2). Ces boucles (B), toutes de même longueur grandiront au fur et à mesure que le treuil tirera la charge. Dans le sens inverse, les boucles (B) des courroies de traction (72-2), (72-1) se réduiront progressivement, sachant que les boucles (B) évoluent dans les mêmes proportions, que ce soit lors de leur extension ou de leur réduction.

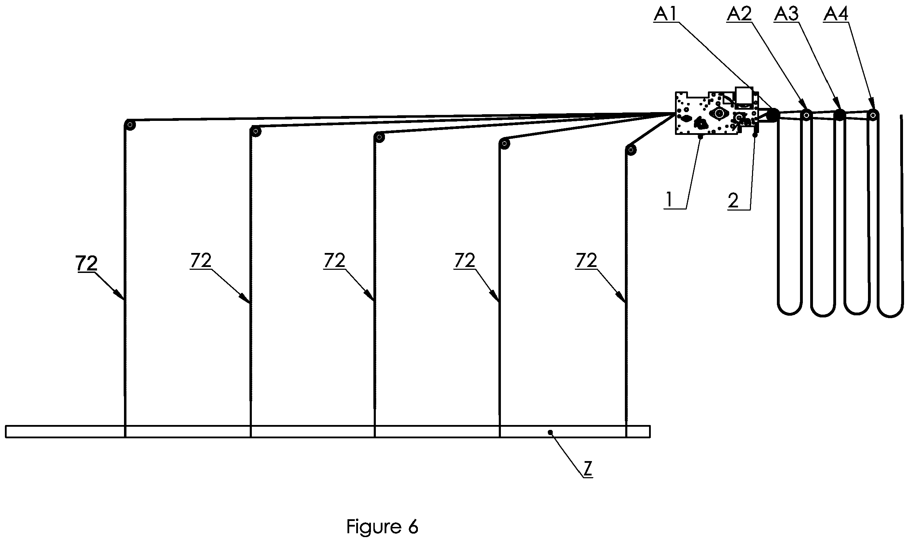

D'autres formes d'exécution du dévidoir sont encore proposées. Par exemple, le dévidoir dit : « à boucles alignées » permet de réduire la largeur du treuil scénique. Il est illustré par la figure 6. Selon cette configuration, pour chaque courroie de traction (72-1), (72-2), quatre axes parallèles aux axes des trains de poulies, appelés A1, A2, A3 et A4 sont disposés à distances régulières, tenus par des paliers et fixés à l'une ou plusieurs des parois du dévidoir (2). Du côté extérieur de cette paroi sont placés, sur chaque axe (A), une poulie menée et une poulie menante. Toutes les roues sont solidaires des axes (A) et disposées de telle sorte qu'une poulie menante est en ligne avec la poulie menée de l'axe (A) suivant.

Selon un mode possible de réalisation, les poulies menées ont chacune le même nombre de dents tandis que les poulies menantes ont un nombre de dents plus important mais identique entre elles. Un facteur déterminant est le rapport entre les nombres de dents des poulies. Des contraintes d'encombrement peuvent également être considérées dans le dimensionnement des poulies et leur nombre de dents. En pratique les poulies disposées sur un même axe (A) ont le même nombre de dents.

Le rapport de vitesse entre les courroies répond à la même formule que pour le dévidoir à boucles parallèles, décrite plus haut. Des courroies de transmission, pouvant être crantées, relient chacune une poulie menante à une poulie menée de l'axe (A) suivant. L'axe A1 du dévidoir (2), c'est-à-dire l'axe le plus proche du treuil (1) comporte une troisième poulie crantée qui a le même nombre de dents que la seconde poulie d'entraînement (20-2) fixée sur le deuxième axe (24) du treuil (1). Pour entraîner ce dévidoir (2), la poulie (20-4) avec le même diamètre et le même nombre de dents que la deuxième poulie d'entraînement (20-2) est fixée sur un prolongement extérieur du deuxième axe (24). Cette poulie (20-4) est reliée à la troisième poulie de l'axe A1 du dévidoir par une courroie crantée. Ainsi lorsque le treuil lève une charge (Z), le train de poulies du dévidoir (2) est entraîné de telle sorte qu'une boucle (B) de la courroie de traction (72) se forme entre chaque poulie, lesquelles sont animées par les roues menantes à des vitesses linéaires distinctes. En particulier, chaque poulie est mue à une vitesse décroissante par rapport à la poulie précédente. Cette forme d'exécution est réalisée avec quatre axes A1, A2, A3, A4, mais ce nombre n'est pas limité. Le dévidoir (2) comprenant les boucles (B) de courroies de traction (72) a le grand avantage d'être orienté vers l'extérieur. Un tapis glissant peut recueillir les boucles qui descendent par gravité, permettant leur étalement tout en évitant leur emmêlement.

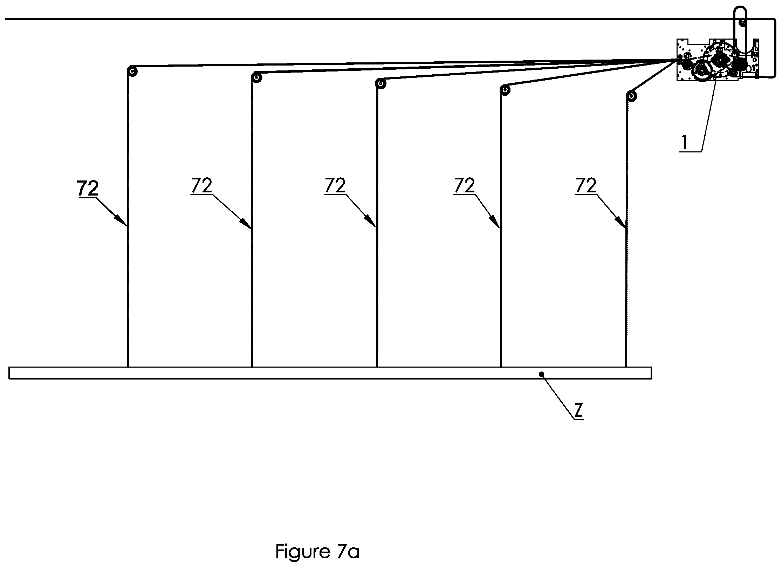

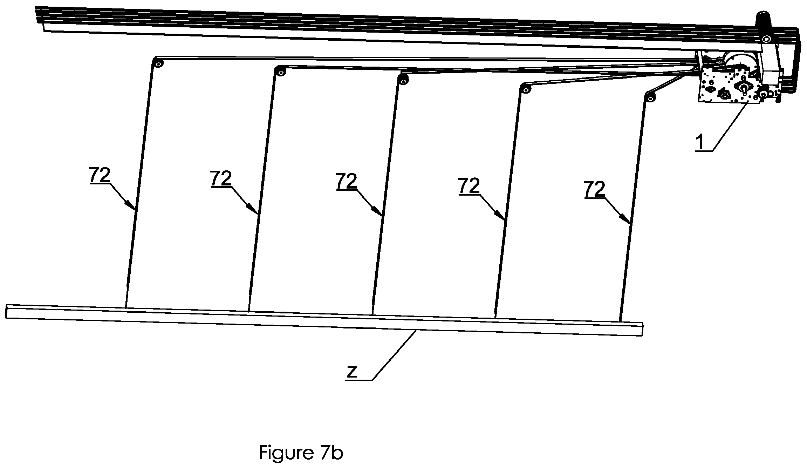

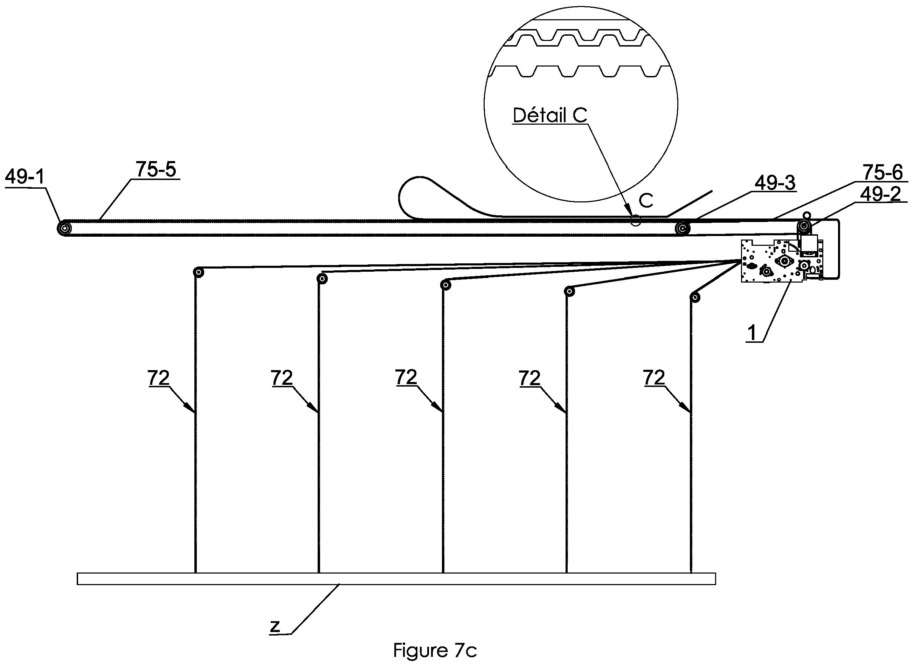

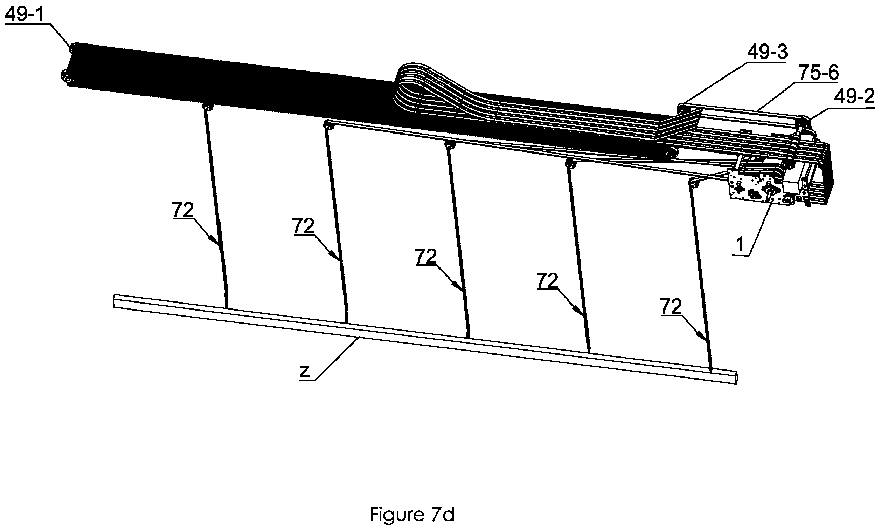

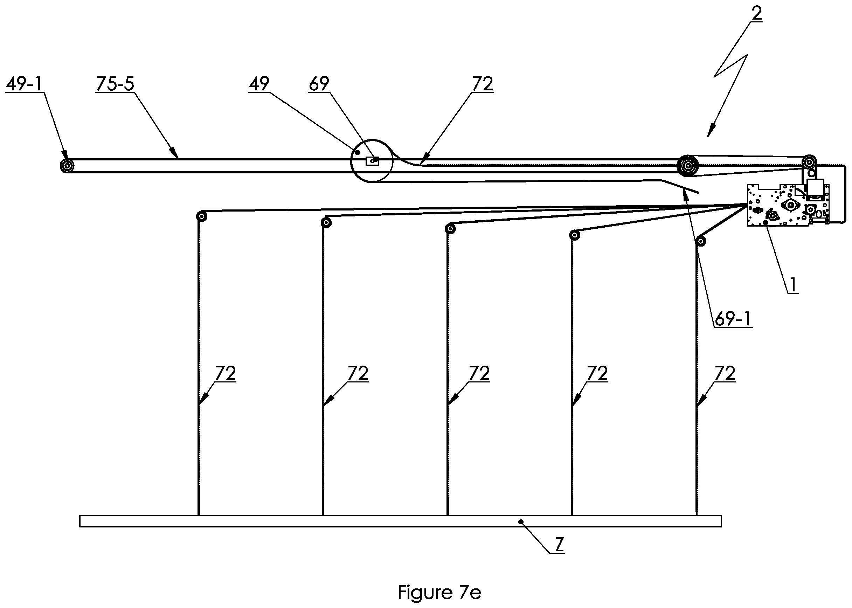

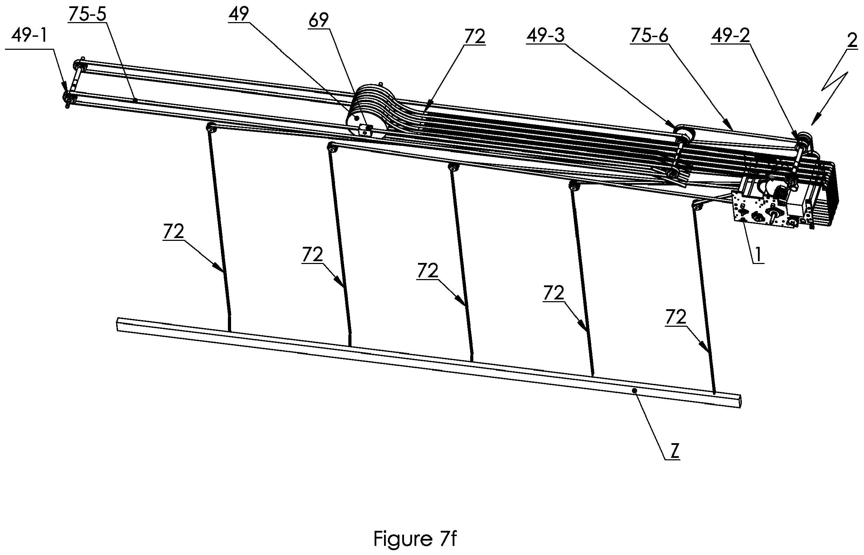

Une variante de ce dispositif est décrite dans les figures 7e et 7f. C'est un dévidoir dit « à boucles entraînées ». Il est de préférence fixé au treuil (1) et permet d'orienter les courroies de traction (72-1, 72-2) au-dessus du treuil (1). Il comprend un cylindre (49) fixé librement sur un axe relié par deux paliers (69) attachés à deux courroies crantées parallèles (75-5) soutenues par des poulies montées sur des axes et des paliers solidaires de la structure du dévidoir (2). Les deux poulies (49-1) les plus éloignées du treuil (1) déterminent, par leur position, la longueur maximale des boucles (B) du dévidoir (2). Deux autres poulies (49-3) sont placées à proximité du treuil (1). Elles sont solidaires d'un axe (49-2) grâce à une courroie de transmission (75-6) elle-même reliée au train de poulies de renvoi décrit dans l'application précédente et synchronisée avec la première poulie d'entrainement (20-2) du deuxième axe d'entrainement (24) du treuil (1). Lors du montage du treuil (1), les extrémités des courroies de traction (72) sont passées autour du cylindre (49) et leur extrémité libre est reliée à un point fixe (69-1), tel qu'un point de connexion électrique. Lors de l'actionnement du treuil (1) dans le sens du levage, le cylindre (49) tirent les courroies de traction (72-1, 72-2) vers les poulies (49-1) les plus éloignées du dévidoir (2). Lors de la descente de la perche (Z), le cylindre (49) effectue le mouvement inverse et la longueur des boucles (B) régresse.

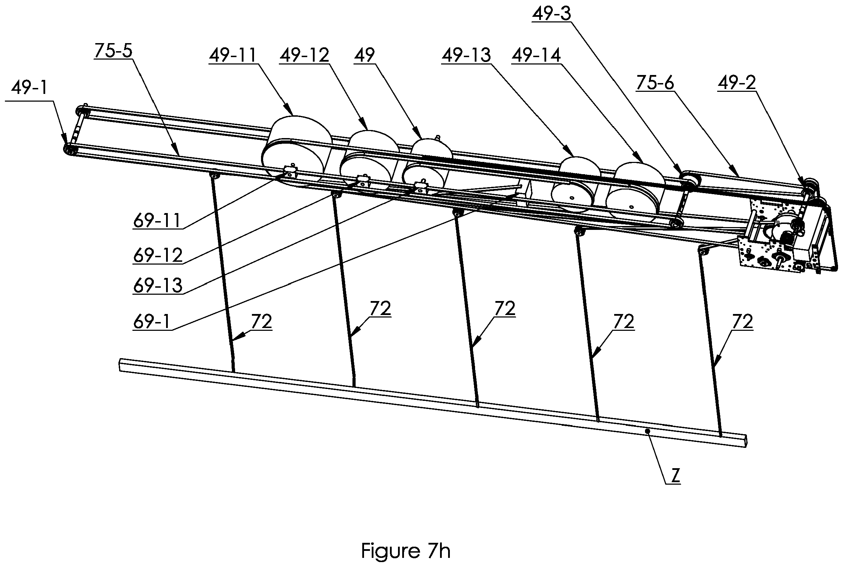

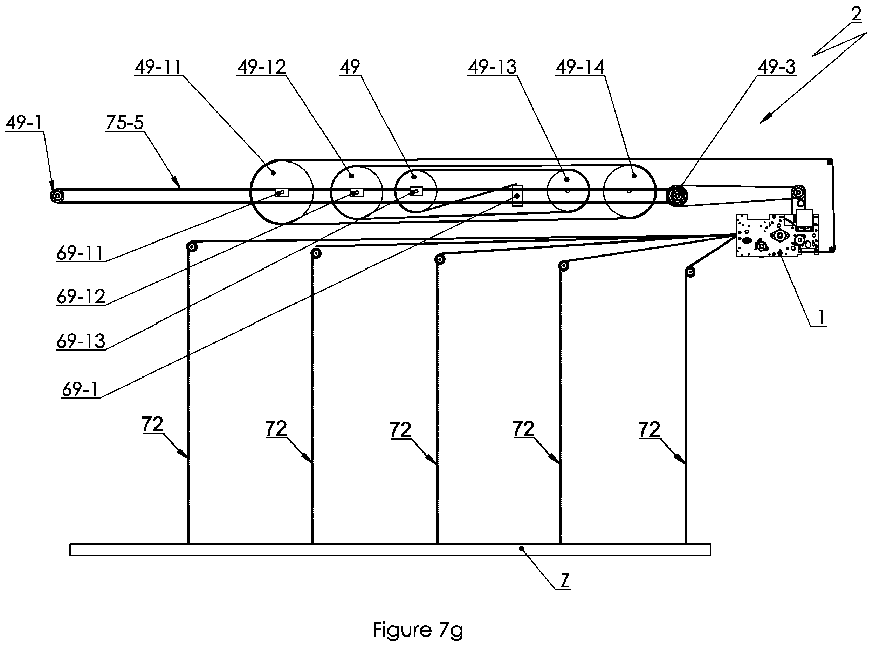

La complication du dévidoir (2), présentée dans les figures 7g et 7h, permet de stocker une plus grande longueur de courroies de traction (72) dans un espace restreint. Le dévidoir (2) selon cet arrangement comprend un train de cinq cylindres (49, 49-11, 49-12 et 49-13, 49-14). Trois cylindres mobiles (49, 49-11, 49-12) sont reliés par des paliers (69-11, 69-12, 69-13) attachés aux deux courroies crantées parallèles (75-5). Les deux autres cylindres (49-13, 49-14) sont montés sur des axes reliés à la structure du dévidoir (2), et par conséquent fixes. Tous les cylindres (49, 49-11, 49-12, 49-13, 49-14) de ce train tournent librement sur leurs axes respectifs. Chacune des courroies de tractions (72-1, 72-2) passe autour de chaque cylindre pour être reliée à un point de connexion fixe (69-1). Lors de l'actionnement du treuil (1) dans le sens du levage, les trois cylindres mobiles (49, 49-11, 49-12) tirent les courroies de traction (72-1, 72-2) vers la poulie (49-1) la plus éloignée du treuil (1). Lors du mouvement inverse, les cylindres mobiles reviennent vers les cylindres fixes. Les boucles sont ainsi en permanence sous contrôle dans un espace restreint.

Une variante non représentée de la complication du dévidoir (2), particulièrement adaptée aux treuils (1) n'ayant qu'une courroie de traction (72) et destinés à enrouler de grandes longueurs de courroie, est également considérée. Selon une telle variante, les cylindres (49, 49-11, 49-12 et 49-13, 49-14) sont remplacés par des jeux de plusieurs poulies indépendantes. Un jeu de poulies peut comprendre 2, 3 ou plus de poulies sur un même axe. La courroie de traction (72) s'enroule alors tour à tour sur les poulies de deux axes contigus. Plus particulièrement, la courroie de traction (72) s'enroule sur la première poulie d'un premier axe, puis sur la première poulie de l'axe adjacent, puis sur la seconde poulie du premier axe, puis sur la seconde poulie de l'axe adjacent, jusqu'à atteindre la dernière poulie de l'axe adjacent. Une fois la dernière poulie de l'axe adjacent atteinte, la courroie de traction (72) peut s'arranger de manière identique sur un autre couple de deux axes adjacents comportant chacun un jeu de poulies. Le nombre de couples d'axes adjacents est adaptable à volonté. Il peut être de deux, trois, quatre ou plus. Le dévidoir (2) peut ainsi accueillir des longueurs de courroies de traction (72) significativement plus importantes.

Cette variante est également applicable aux treuils (1) pourvus de plus d'une courroie de traction (72). Dans ce cas, autant de jeux de poulies que de courroies de traction (72) doivent être prévus.

La configuration du dévidoir « à boucles entraînées » permet de maintenir les courroies de traction (72-1, 72-2) près du plafond, évitant ainsi les boucles (B) tombantes. Une telle disposition facilite la mobilité de la structure comprenant le treuil (1) et le dévidoir (2) placée dans le champ scénique, ainsi que sa mise en place.

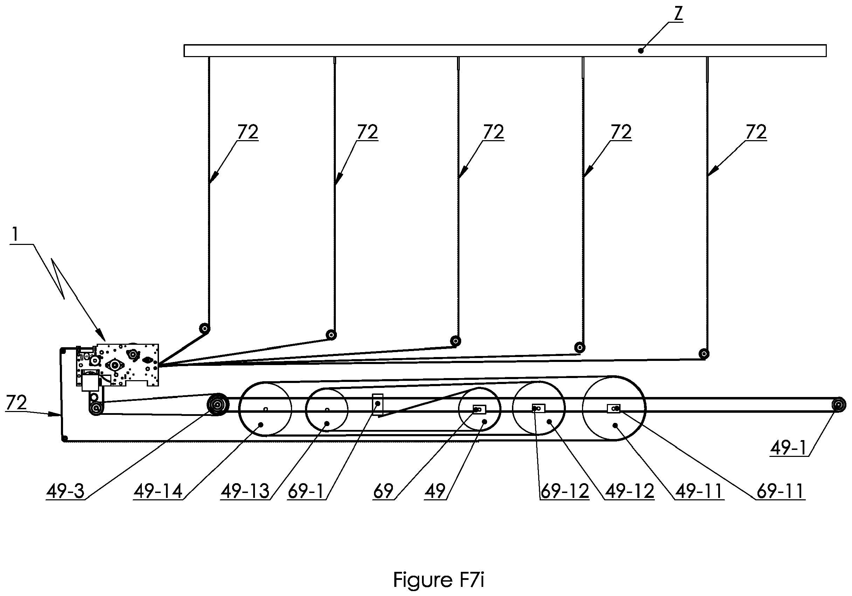

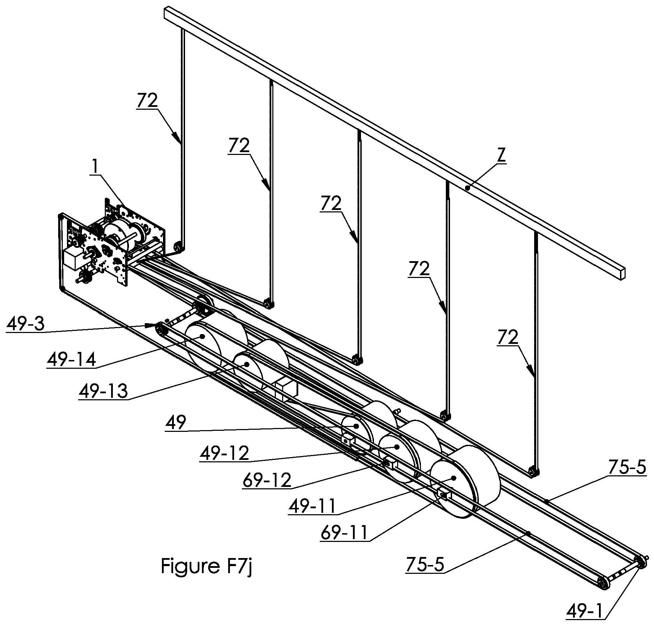

Une configuration inversée du treuil à «boucles entraînées» est schématisées dans les figures 7i et 7j. selon une telle configuration, le treuil (1) est disposé plus bas que la charge à tracter (Z), laquelle peut être retenue vers le haut par des moyens de suspension (non représentés). Alternativement, la charge (Z) dénote dans une telle configuration inversée le plafond ou un élément fixe du plafond. Le treuil (1) est alors solidarisé de la charge à tracter par tout moyen de fixation adéquat. L'activation du treuil (1) permet dans ces conditions de tracter le treuil (1) ainsi que la charge qui lui est associée vers le haut.

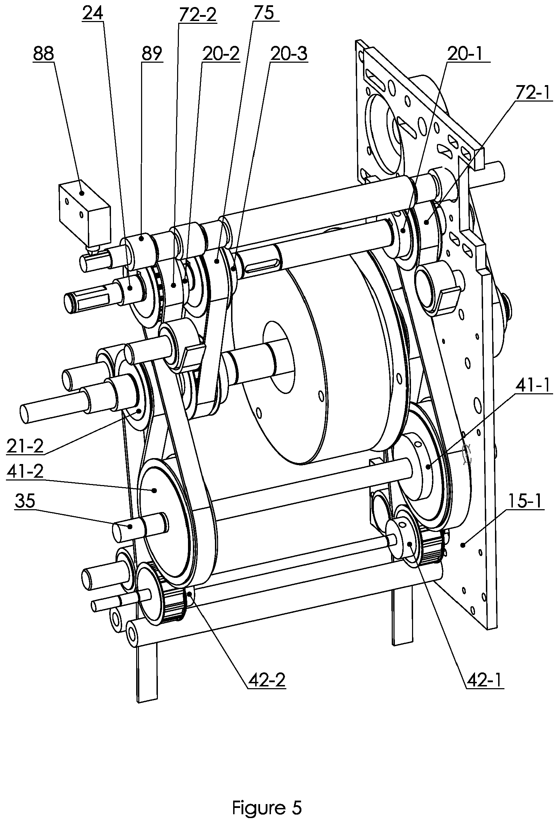

De manière avantageuse, le treuil selon la présente invention comporte un dispositif de sécurité. La figure 5 illustre un dispositif de sécurité de fonctionnement du treuil. Pour éviter un déplacement latéral des courroies de traction (72-1), (72-2) sur les secondes poulies d'entrainement (20-1), (20-2), un axe de sécurité, libre en rotation (89), muni de galets solidaires de l'axe est disposé parallèlement au second axe d'entrainement (24), et fixé par ses extrémités aux supports (15-2), (15-1) du treuil (1). Les galets solidaires de l'axe de sécurité (89) sont disposés en vis-à-vis des bords des secondes poulies d'entrainement (20-1), (20-2), à une distance suffisamment proche pour être entrainée par une courroie de traction (72) si celle-ci vient à se décaler sur sa poulie d'entrainement. La surface de l'axe de sécurité (89) est elle aussi suffisamment proche de la surface des poulies d'entrainement de telle manière à ne pas être entraînée par les courroies de traction (72-1), (72-2) en cas de fonctionnement optimum et à se trouver entrainé par les courroies de traction (72-1), (72-2) en cas de surépaisseur, due par exemple au chevauchement des crans de la courroie d'entrainement sur les dents de la poulie d'entrainement correspondante. L'axe de sécurité (89) a ainsi pour fonction de maintenir toutes les courroies sur la denture de leur poulie respective.

L'axe de sécurité (89) peut comporter des galets supplémentaires en vis-à-vis de la poulie de transmission (20-3), située sur le second axe d'entrainement (24), de manière à maintenir en position la courroie de transmission intermédiaire (75).

L'axe de sécurité (89) est en contact avec un capteur (88), qui peut être, par exemple, un contact électrique. Un tel capteur peut avantageusement être fixé ou intégré à un support (15-1), (15-2) du treuil (1) au contact d'une extrémité de l'axe de sécurité (89). Si une poulie venait à se déplacer latéralement ou si une courroie de traction (72-2), (72-1) venait à chevaucher le flasque d'une seconde poulie d'entrainement (20-1), (20-2) ou si les dents d'une courroie de traction (72-1), (72-2) ripe sur la denture de la poulie correspondante, l'incident mettrait l'axe de sécurité (89) en rotation et activerait le capteur (88). L'activation du capteur (88) peut s'ensuivre de la coupure de l'alimentation du moteur (11) ou de la génération d'un signal d'alarme ou bien des deux.

Alternativement ou en plus, le dévidoir (2) décrit plus haut, quelle que soit sa configuration, peut être équipé d'un système de sécurité équivalent à celui décrit pour le treuil (1). En particulier, un ou plusieurs axes de sécurité, comprenant des galets (44-1, 44-2) dont le contact avec la courroie crantée initie la rotation des axes de sécurité, peuvent être intégrés à proximité des poulies. De tels axes peuvent servir également d'entretoise entre les supports latéraux du dévidoir (2).

Il est aussi possible de réaliser un treuil similaire avec une seule courroie de traction (72) et avec un dévidoir (2) comportant une seule boucle (B). L'étroitesse d'un tel arrangement facilite davantage son installation dans les structures de la scène. Il peut être utilisé par exemple en binôme avec un second treuil identique. Dans ce cas, les courroies de traction (72) des deux treuils fonctionnant alors de manière synchronisée pour soulever un décor.

La taille des bobines, des tambours, ou des freins (12) du treuil (1), traditionnellement volumineux, peut être réduite grâce aux arrangements décrits ici.

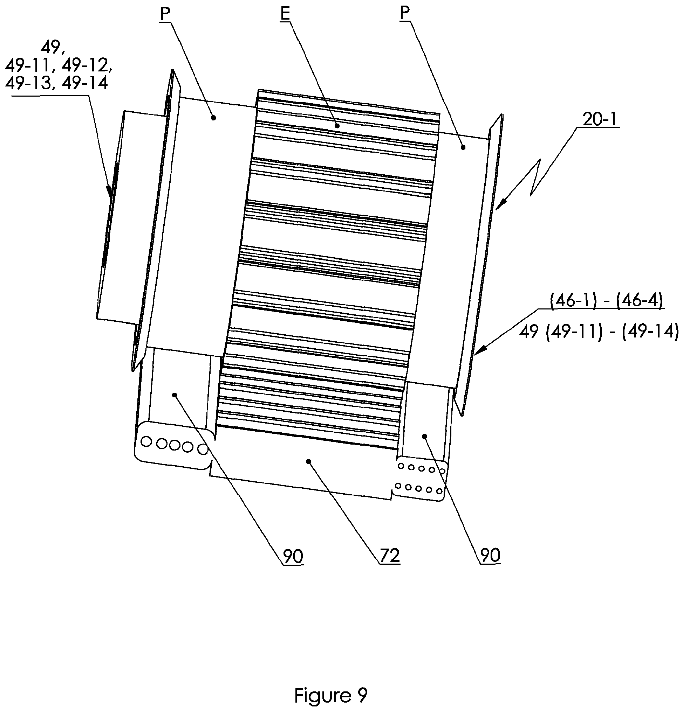

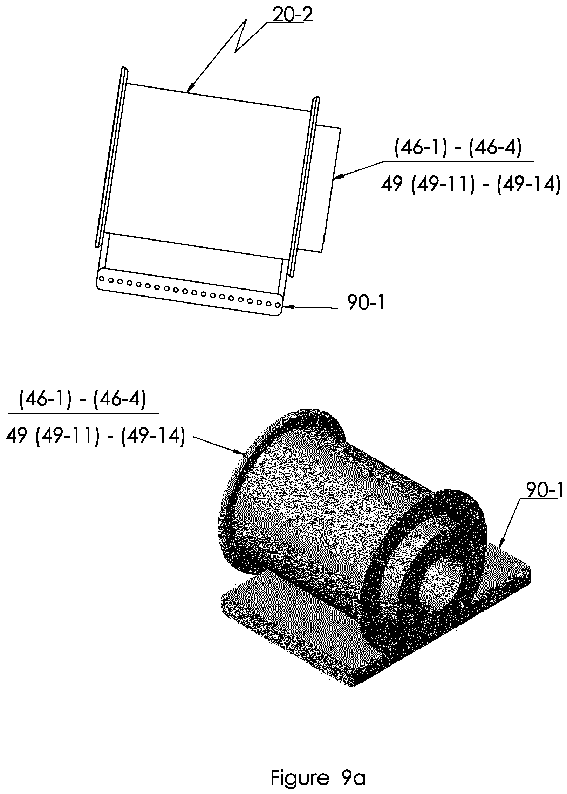

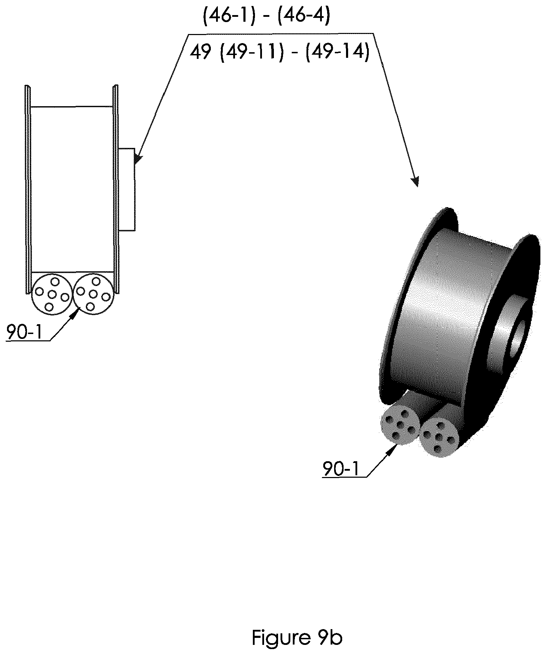

Les figures 9, 9a et 9b représentent les poulies libres (46-1 ; 46-2 ; 46-3 ; 46-4; 49 ; 49-11 ; 49-12; 49-13 ; 49-14) du dévidoir (2) selon différents modes de réalisation. Les poulies libres (46-1 ; 46-2 ; 46-3 ; 46-4 ; 49 ; 49-11 ; 49-12; 49-13 ; 49-14) du dévidoir (2) peuvent être indépendamment l'une de l'autre lisses ou crantées, ou comporter plusieurs zones différentes, à l'instar des poulies d'entrainement (20-1, 20-2, 21-1, 21-2) du treuil (1). Les poulies libres (46-1 ; 46-2 ; 46-3 ; 46-4; 49 ; 49-11 ; 49-12 ; 49-13 ; 49-14) du dévidoir (2) peuvent être dédiées au stockage exclusif des courroies de traction (72). Elles peuvent être à cette fin crantées ou bien lisses. Les poulies libres (46-1 ; 46-2 ; 46-3 ; 46-4 ; 49 ; 49-11 ; 49-12; 49-13 ; 49-14) du dévidoir (2) peuvent alternativement permettre le stockage d'une ou plusieurs courroies de traction (72) combinées à un ou plusieurs câbles (90). Elles peuvent à cette fin comporter plusieurs surfaces distinctes, dont une portion est crantée. Elles peuvent alternativement être totalement lisses.

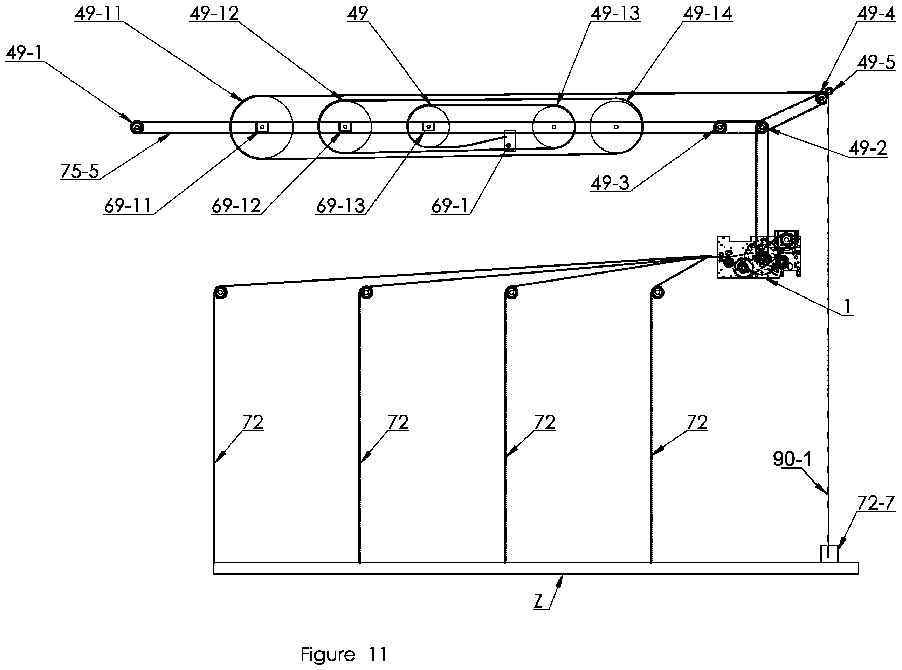

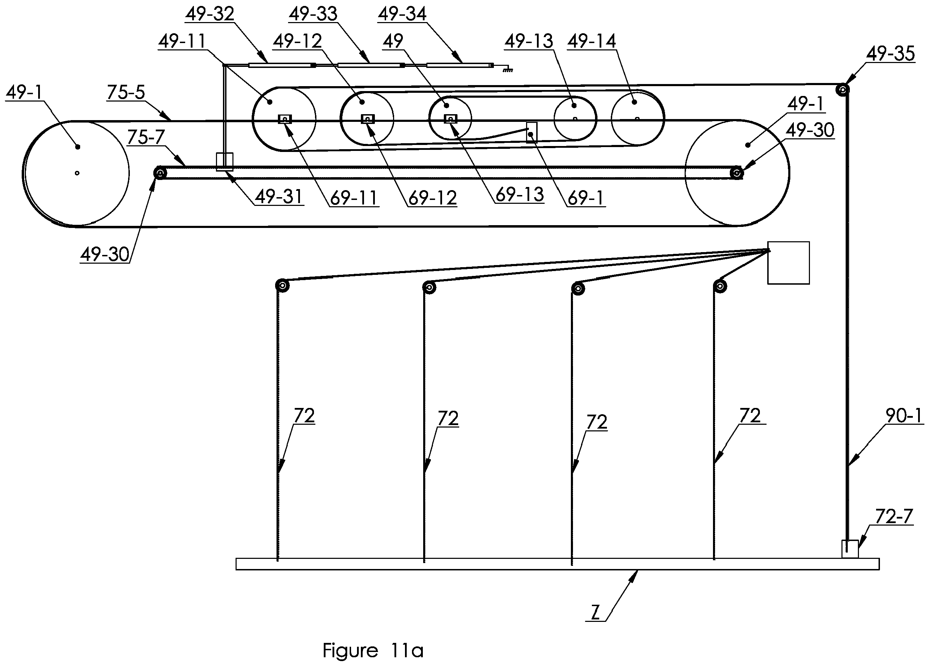

Selon un mode de réalisation particulier, le dévidoir (2) peut être utilisé pour stocker un ou plusieurs câbles indépendants (90-1) distinct des courroies de traction (72), comme schématisé par exemple dans les figures 11 et 11a. Dans ces conditions, les poulies libres (46-1 ; 46-2 ; 46-3 ; 46-4; 49 ; 49-11 ; 49-12; 49-13 ; 49-14) du dévidoir (2) peuvent être lisses, dans la mesure où la charge à tirer se limite au poids du câble indépendant (90-1) à stocker dans le dévidoir (2), éventuellement combiné à une charge ponctuelle faible, inférieure à environ 30 Kg. Elles peuvent être distinctes des poulies correspondantes dédiées au stockage des courroies de traction (72). Il n'est cependant pas exclu que le câble indépendant (90-1) puisse s'enrouler sur les mêmes poulies que celles servant au stockage des courroies de traction (72) ou sur des poulies solidaires de celles servant au stockage des courroies de traction (72). Le stockage du câble indépendant (90-1) est en effet synchronisé avec celui des courroies de traction (72).

Selon un mode de réalisation, les poulies libres (46-1 ; 46-2 ; 46-3 ; 46-4 ; 49 ; 49-11 ; 49-12; 49-13 ; 49-14) du dévidoir (2) comportent des poulies indépendantes dédiées exclusivement au stockage de câbles indépendants (90-1). Bien que la surface de telles poulies puisse être totalement lisse, elle peut comporter une portion crantée, adaptée à la traction de charges légères, inférieures à 30 Kg, de préférence inférieures à 10 Kg. Le câble indépendant (90-1) peut être un câble de suspension pour charges légères, de préférence inférieure à environ 30 Kg. Alternativement le câble indépendant (90-1) peut être un câble électrique. Dans ce cas il peut être avantageux de le coupler à une courroie de traction (non représentée) indépendantes des courroies de traction (72) mues par le treuil (1), de sorte à éviter son étirement sous l'influence de son propre poids ou de son poids combiné à la charge à laquelle il est relié. Les câbles électriques, constitués de cuivre, ne sont généralement pas adaptés à la traction de charges lourdes. La courroie de traction associée au câble indépendant (90-1) peut être lisse ou bien crantée. Le type de câble indépendant (90-1) ainsi enroulé est de préférence de section plate. Une telle disposition peut avantageusement être mise à profit pour le stockage des câbles indépendants (90-1) tels que des câbles électriques accompagnés d'un dispositif électrique ponctuel, tel qu'une lampe ou tout autre dispositif d'éclairage léger. Le câble indépendant (90-1) peut alternativement permettre la traction de charges légères non électrifiées telles que des banderoles, ou des éléments de décors. Dans ce cas le câble indépendant (90-1) peut être un câble de traction non électrique. Le dévidoir (2) peut ainsi être utilisé pour la traction de charges légères, indépendamment des courroies de tractions (72) tractées par le treuil (1), pouvant rester synchronisées avec le treuil (1).

Tout type de câbles indépendant (90-1) ou ensemble de câbles indépendants peut être enroulé dans le dévidoir (2). Le câble indépendant ou l'ensemble de câbles indépendants (90-1) peut comporter une section circulaire, plate ou bien mixte, comportant des surfaces plates et des surfaces rondes. Lorsque le câble indépendant (90-1) est de section circulaire, plusieurs spires peuvent être enroulées sur la circonférence d'une ou plusieurs des poulies libres du dévidoir (2).

Pour les dévidoirs décrits ci-dessus, le diamètre et l'usinage des cylindres ou poulies (46-1 ; 46-2 ; 46-3 ; 46-4 ; 49; 49-11 ; 49-12 ; 49-13 ; 49-14) restent indépendants de la longueur de stockage des courroies de traction (72-1, 72-2). La longueur de stockage d'une courroie de traction (72) dépend essentiellement de la somme du déplacement des boucles. La longueur de stockage des câbles électriques, qu'ils soient associés aux courroies de traction (72) ou indépendants (90-1) est également définie par la somme des boucles produites par les poulies ou cylindres (46-1 ; 46-2 ; 46-3 ; 46-4 ; 49 ; 49-11 ; 49-12; 49-13; 49-14). L'extrémité du câble électrique (90, 90-1) est reliée à une borne (69-1) fixe.

La figure 11 schématise un mode de réalisation particulier dans lequel le câble indépendant (90-1) n'est pas solidaire d'une courroie de traction crantée (72). Selon ce mode de réalisation, le câble indépendant (90-1) est connecté à la perche (Z) via un connecteur électrique (72-7), mais n'exerce sur la perche (Z) aucune force de traction, ou une force de traction insuffisante pour lever la charge. L'enroulement et le déroulement du câble indépendant (90-1) est synchronisé avec le treuil (1) grâce à la courroie du dévidoir (75-5). Une ou plusieurs poulies de renvoi (49-2, 49-4) peuvent être prévues sur le parcours du câble indépendant (90-1), soit libres en rotation, soit entraînées par le treuil de manière synchronisée. Ces poulies de renvoi (49-2, 49-4) peuvent être lisses et non crantées. Leur force de traction suffit à l'entrainement du câble indépendant (90-1). Une poulie de renvoi (49-4) peut être avantageusement entrainée par le treuil (1) lorsque le poids de la perche n'est pas suffisant pour entrainer spontanément le déroulement du câble indépendant (90-1). Dans ce cas, l'entrainement synchronisé de la poulie de renvoi (49-4) permet de dérouler le câble indépendant (90-1) de manière synchrone avec les courroies de traction (72). L'enroulement du câble indépendant (90-1) peut s'effectuer sans entrainement de la poulie de renvoi (49-4), grâce à la poulie de transmission (49-3) du dévidoir (1). La poulie de renvoi (49-4) est de préférence une roue libre dans le sens de l'enroulement du câble indépendant (90-1). Optionnellement, un ressort de tension peut être inclus entre le câble indépendant (90-1) et la perche (7) de sorte à compenser les éventuelles forces de traction indésirables sur la perche. Le câble indépendant (90-1) est ensuite entrainé dans le dévidoir (2) de manière synchronisée avec la ou les courroies de traction (72).

La figure 11a schématise un mode de réalisation dans lequel le câble indépendant (90-1) reste indépendant du treuil (1), tout en pouvant être stocké dans le dévidoir (2). Selon ce mode de réalisation, le dévidoir (2) comporte une courroie de transmission (75-7) crantée, tournant en boucle fermée autour de deux poulies de transmission (49-30). La courroie de transmission (75-7) est entraînée autour des poulies de transmission (49-30) au moyen d'un ou plusieurs moyens de traction. Les moyens de traction peuvent être par exemple des vérins à gaz (49-32, 49-33, 49-34) calibrés de sorte à compenser le poids du câble indépendant (90-1) à enrouler. Ils peuvent être définis pour ne pas exercer de force de traction trop importante et susceptible de tirer la perche (Z). Plusieurs vérins à gaz, de calibres différents, peuvent être prévus de manière à tenir compte de la longueur de câble indépendant (90-1) déroulée et de la masse de câble indépendant (90-1) à rappeler. Alternativement, les moyens de traction peuvent comporter un moteur électrique permettant d'exercer une force de traction légère, de préférence inférieure à 30 Kg, correspondant usuellement au poids de câbles éventuellement couplés à un dispositif électrique. L'une au moins des poulies de transmission (49-30) entraine les cylindres du dévidoir (2), soit directement, soit par l'intermédiaire d'une ou plusieurs poulies de réduction (49-1) permettant d'établir les rapports nécessaires pour synchroniser le stockage du câble indépendant (90-1) avec l'enroulement des courroies de tractions (72). Une ou plusieurs poulies de renvoi (49-35) peuvent être prévues sur le parcours du câble indépendant (90-1), de préférence libres en rotation dans les deux sens.

Les dispositions décrites ici avec un câble (90, 90-1), qu'il soit indépendant ou combiné à une courroie de traction (72) sont applicables de la même manière à tous types de câbles ou ensemble de câbles. Les mêmes dispositions peuvent être appliquées pour un ou plusieurs câbles informatiques, de type ethernet, internet, coaxial, blindé ou protégé. Les câbles utilisés incluent les câbles de forte tension, dits de puissance, permettant d'alimenter par exemple un ou plusieurs moteurs électriques, les câbles de courant faible, utilisés pour transmettre de l'information, des données de type vidéo, audio, ou autre, et des câbles pneumatiques, utilisés dans le pilotage d'appareils automatisés pneumatiques. Le câble indépendant (90-1) inclue également des câbles de traction adaptés aux faibles charges, tels que des filins d'acier.

Bien que le dévidoir (2) soit décrit ci-dessous comme étant couplé au treuil présenté dans la présente description, il peut être utilisé de manière indépendante du treuil (1) ou en combinaison avec d'autres type de treuils. Il est en particulier considéré que le dévidoir (2) décrit ici, quel que soit son mode de réalisation, peut être ajouté et adapté à des treuils déjà installés, ou bien intégré à des installations déjà en place.

En particulier, le dévidoir utilisé pour le stockage d'une ou plusieurs courroies de traction (72) entraînées par un treuil, comprend au moins une courroie crantée (75-5) entraînée par une courroie de transmission (75-6, 75-7). La ou les courroies crantées (75-5) coopèrent avec au moins un cylindre mobile (49) (49-11), (49-12), et optionnellement avec au moins un cylindre fixe (49-13), (49-14) tournant librement sur un axe (69, 69-11, 69-12, 69-13). Le dévidoir (2) peut comprendre en outre une ou plusieurs poulies de renvoi (49-4) permettant d'enrouler et de dérouler un câble indépendant (90-1) des courroies de traction (72). La courroie de transmission (75-6, 75-7) peut être entrainée par le treuil utilisé pour la traction de la ou des courroies de traction (72), ou bien par un ou plusieurs moyens de traction (49-32, 49-33, 49-34) indépendants du treuil. Le dévidoir (2) se caractérise en ce que les cylindre mobile (49) (49-11), (49-12) et fixe (49-13), (49-14) sont configurés de sorte à enrouler la ou les courroies de traction (72) ou un câble indépendant (90-1), ou un ensemble constitué de courroies de traction (72) et d'un câble indépendant (90-1), dans le dévidoir (2), de manière synchrone avec le treuil. Le dévidoir (2) peut alternativement comprendre au moins un premier jeu de poulies (46-1 à 46-4) montées libres en rotation sur un axe support (45) et au moins un second jeu de poulies (51, 52, 53, 54) solidaires d'un axe relai (43). Les poulies (46-1 à 46-4) du premier jeu de poulies sont chacune entraînées par une courroie de transmission (75-1), (72-2), (75-3), (75-4), reliée à chacune des poulies (51, 52, 53, 54) du second jeu de poulies. L'axe relai (43) peut être entrainé en rotation par le treuil utilisé pour la traction de la ou des courroies de traction (72) ou bien par un ou plusieurs moyens de traction (49-32, 49-33, 49-34) indépendants du treuil. Les poulies entrainées par l'axe relai (43) ont des diamètres différents les unes des autres. Les poulies montées libres en rotation sur l'axe support (45) ont de préférence toutes le même diamètre.

Un autre avantage déterminant du dévidoir selon l'invention est que les des deux courroies de traction (72-1), (72-2) peuvent être renforcées par des brins métalliques (80). Une de leurs extrémités peut alors être librement fixées sur une prise électrique et conduire le courant jusqu'à l'autre extrémité des courroies de traction (72-1), (72-2), située sur le lieu de préhension de la charge (Z). Les brins métalliques (80) peuvent conduire du courant à basse tension.

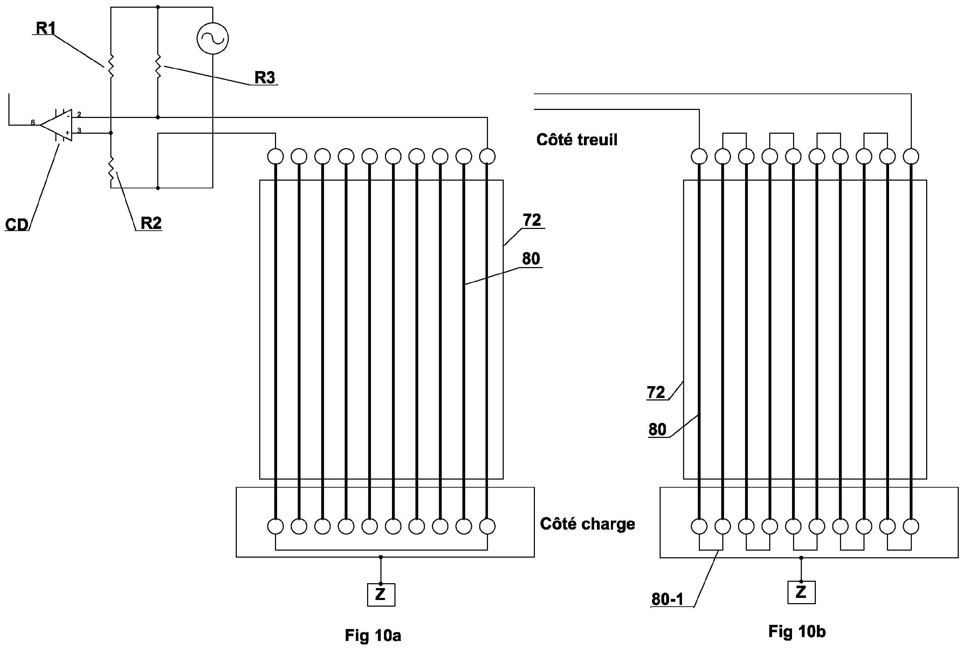

Les brins métalliques (80) peuvent également être utilisés comme élément de sécurité, comme schématisé aux figures 10a et 10b. En reliant les extrémités de chaque brin métallique (80) de la courroie de traction (72), à l'exception du premier et du dernier brin situés au bout de la courroie placé près du dévidoir (2), il est créé une ligne électrique continue reliant tous les brins (80).

Cette ligne électrique peut être raccordée à un circuit électrique du type « Pont de Wheatstone » de manière à pouvoir en mesurer la variation des caractéristiques électriques.

Un exemple d'un tel circuit est schématisé à la figure 10a. Il comprend notamment un capteur différentiel (CD), une première résistance (R1), une seconde résistance (R2) et une troisième résistance (R3). La première résistance (R1) est connectée à une borne du capteur différentiel (CD) et à une extrémité de la ligne électrique. La troisième résistance (R3) est reliée à l'autre extrémité du circuit électrique et à l'autre borne du capteur différentiel (CD). D'autres circuits électriques sont également possibles.

Le circuit électrique permet alors de détecter, par exemple, une rupture de la courroie de traction (72). Il permet en outre de détecter son allongement excessif indiquant une surcharge.

Selon le mode réalisation alternatif décrit dans le schéma 10b, les brins métalliques (80) sont reliés électriquement les uns aux autres à l'aide de connexions électriques (80-1). La longueur de la ligne électrique ainsi créée est plus importante et permet une meilleure précision de mesure des défaillances éventuelles.

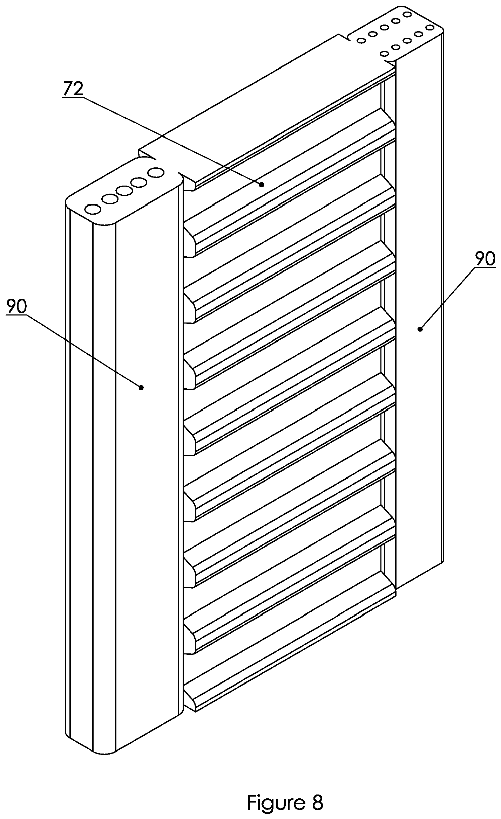

Pour conduire du courant à haute tension, il est prévu d'adjoindre à une ou plusieurs courroies de traction (72-2), (72-1) un ou plusieurs conducteurs plats (90), comportant des fils de cuivre, de telle sorte que les conducteurs fassent corps avec la courroie de traction (72), par exemple par collage, par soudage ou par extrusion (Figure 8). La figure 9 représente une poulie d'entraînement (20-1) adaptée pour entrainer une courroie de traction (72), flanquée de deux conducteurs (90). La surface de roulement d'une telle poulie d'entrainement comporte alors plusieurs zones. Une zone d'entrainement (E), en contact avec la courroie de traction (72) et une ou plusieurs zone de passage (P), permettant le passage du ou des conducteurs associés à la courroie de traction (72). Dans le cas où la courroie de traction (72) est crantée, la zone d'entrainement comporte des dents adaptées à l'entrainement de la courroie de traction (72), et les zones de passage restent lisses. Alternativement, dans le cas de courroies de traction lisses ou striées, la zone de traction (E) peut se résumer à une ou plusieurs surépaisseur en contact avec la courroie de traction (72). La zone de traction (E) peut par exemple être centrale et les zones de passage (P) peuvent être disposées de part et d'autre. Cependant, d'autres dispositions peuvent être envisagées, notamment où la zone d'entrainement (E) est en position latérale et où les zones de passage sont regroupées en une seule zone (P). Cette forme d'exécution a le grand avantage de réunir les qualités mécaniques de la courroie crantée aux qualités électriques des conducteurs.

La poulie représentée à la figure 9 dans le cadre du treuil (1) peut être utilisée dans un dévidoir (2) synchronisé avec le treuil, comme exposé plus en détails ci-après.

Dans le cadre de son utilisation, le treuil scénique peut être affecté au déplacement d'une perche de décor (Z). Selon une application connue, cette perche (Z) à quelques mètres de longueur et plusieurs points d'attache sont nécessaires pour assurer un mouvement régulier. A chaque point d'attache est fixée une courroie de traction (72). Dans les formes d'exécution représentées par les figures 6, 7e, 7f, 7g, 7h, ce sont cinq courroies crantées (72) parallèles, provenant du treuil (1), qui sont attachées à la perche (Z). Dans cette application, il y a donc cinq jeux de poulies d'entraînement. Alternativement, une poulie suffisamment large pour accueillir l'ensemble des courroies peut être utilisée. Le dévidoir (2) ne contient alors plus qu'un train de poulies entraînées par le deuxième axe d'entrainement (24). L'une des extrémités des courroies de traction (72) est reliée, le cas échéant à une prise électrique. Lorsque le treuil (1) remonte la perche (Z), les courroies de traction (72) se déplacent en parallèle et forment chacune une boucle (B) dans le dévidoir (2) de circonférence croissante. Inversement, lorsque la perche (Z) descend, les boucles (B) se réduisent. Les boucles (B) peuvent être orientées dans une direction différente de la verticale, grâce par exemple, à un plan incliné sur lequel elles peuvent se reposer et être écartées de la scène. Un plan incliné peut par exemple prendre la forme d'une paroi glissante et/ou d'une coulisse.

La courroie de traction (72) est de préférence une courroie crantée, dans les différentes formes d'exécution décrites, à cause de ses qualités mécaniques et de la précision des déplacements. Pour qu'il y ait une erreur de positionnement, il faut nécessairement que des dents aient ripées sur les poulies d'entraînement, ce qui est fort peu probable dans le cadre de cette invention. Un des éléments clés de l'élément de traction, outre la résistance mécanique et l'allongement est le rayon de courbure admissible. Les poulies d'entraînement devront obligatoirement être compatibles avec le moyen de traction choisi et ses caractéristiques. De plus, il est connu que les courroies crantées n'ont pas le même rayon de courbure admissible dans les deux sens de la flexion. C'est pour cette raison que les poulies tendeur (41) sont plus grandes que les poulies d'entraînement.

Les formes d'exécution décrites ci-dessus sont des exemples d'utilisation de l'invention qui ne limitent en rien son champ d'application.

**Numéros de référence employés sur les figures**

(1): Treuil
(2) : Dévidoir
(11) : Moteur
(12) : Frein de sécurité
(14) : Premier axe d'entrainement
(15-2), (15-1) : Supports du treuil
(17-2) : Premier jeu de galets d'appui

(17-1) : Deuxième jeu de galets d'appui
(17-11), (17-12) : Galets d'appui
(20-3): Poulies de transmission menée
(20-1) et (20-2) : Secondes poulies d'entrainement
(21-1) et (21-2) : Premières poulies d'entrainement
(21-3) : Poulie de transmission menante
(20a et 20b) : Poulies de transmission principales
(24) : Second axe d'entrainement
(28) et (29) : Entretoises
(35) : Axe libre
(41-2) et (41-1) : Jeu de tendeurs lisses
(42-2) : Poulie de guidage
(43) : Axe d'entrainement du dévidoir
(44-1), (44-2) : Galets sur axes transversaux
(45) : Axe de poulies du dévidoir
(46-1 à 46-4) : Poulies libres du dévidoir
(49) : Cylindre libre du dévidoir
(49-2), (49-3), (49-30) : Poulies de transmission du dévidoir
(49), (49-11), (49-12) : Cylindres mobiles du dévidoir
(49-1) : Poulie de réduction
(49-13), (49-14) : Cylindres fixes du dévidoir
(49-32, 49-33, 49-34) : vérins à gaz
(49-35) : Poulies de renvoi
(51, 52, 53, 54) : Poulies pilote du dévidoir
(69) : Paliers de cylindre du dévidoir
(69-1) : Point fixe de l'extrémité de la courroie de traction
(69-11), (69-12), (69-13) : Paliers du dévidoir
(72), (72-1), (72-2) : Courroie de traction
(75-1), (75-2), (75-3), (75-4): Courroies de transmission du dévidoir
(75) : Courroie de transmission intermédiaire
(75-5) : Courroies du dévidoir
(75-6) : Courroie de transmission du dévidoir
(75-7) : Courroie d'entrainement du dévidoir
(80) : Brins métalliques
(80-1) : connexions électriques
(89) : Axe de sécurité
(88) : Capteur
(90) : Conducteur plat
(90-1) : Câble indépendant
(B) : Boucle de courroie
(A), (A1), (A2), (A3, A4) : Axes du dévidoir
D1 : Diamètre des premières et secondes poulies d'entrainement
(E) : Zone d'entrainement
(P) : Zone de passage
(R1), (R2), (R3) : résistances électriques
(CD) : capteur différentiel
(Z) : perche ou charge à lever

**Revendications**

**1.** Treuil scénique comprenant des supports (15-2), (15-1), un premier axe d'entrainement (14) disposé entre les supports (15-2), (15-1) et muni d'au moins une première poulie d'entrainement (21-2) et d'au moins un moyen de traction entrainé par la au moins première poulie d'entrainement (21-2), **caractérisé**:

- **en ce qu'**il comprend un second axe d'entrainement (24) muni d'au moins une seconde poulie d'entrainement (20-2), synchronisé avec le premier axe d'entrainement (14), et en ce que le au moins un moyen de traction est entraîné à la fois par la au moins première poulie d'entrainement (14) et la au moins seconde poulie d'entrainement (24),
- **en ce que** le premier axe d'entrainement (14) et le second axe d'entrainement (24) sont synchronisés à l'aide d'une première poulie de transmission (21-3) disposée sur le premier axe d'entrainement (14), d'une seconde poulie de transmission (20-3) disposée sur le second axe d'entrainement (24) en vis-à-vis de la première poulie de transmission (21-3) et d'un moyen de transmission intermédiaire relié à la première poulie de transmission (14) et à la seconde poulie de transmission (20-3), et
- **en ce que** le au moins un moyen d'entrainement est une courroie crantée (72) et en ce que les au moins première (21-2) et au moins seconde (20-2) poulies d'entrainement comportent des dents complémentaires des crans de la courroie crantée.

2. treuil selon la revendication 1, **caractérisé en ce que** le moyen de transmission intermédiaire est une courroie crantées (75-2) et **en ce que** les première (21-3) et seconde (20-3) poulies de transmission comportent des dents complémentaires des crans de la courroie de transmission (75-2).

3. Treuil selon les revendications 1 ou 2, **caractérisé en ce que** le premier axe d'entrainement (14) est entraîné par un moteur électrique (11), disposé sur les supports (15-2), (15-1) du treuil.

4. Treuil scénique selon l'une des revendications précédentes, **caractérisé en ce qu'**il comprend un troisième axe (35), parallèle au premier axe d'entrainement (14) et au second axe d'entrainement (24), et comportant au moins un tendeur lisse (41-2) dédié au réglage et à la tension du au moins un moyen d'entrainement.

5. Treuil scénique selon la revendication 4, **caractérisé en ce que** le au moins un tendeur lisse (41-2) est disposé à une distance de la au moins une première poulie d'entrainement (21-2) correspondante inférieure à l'épaisseur dudit au moins un moyen de traction.

6. Treuil selon l'une des revendications précédentes, **caractérisé en ce qu'**il comprend en outre un dispositif de sécurité comprenant un axe de sécurité (89), libre en rotation, disposé parallèlement au second axe d'entrainement (24) et fixé par ses extrémités aux supports (15-1), (15-2) du treuil (1), comprenant des galets disposés en vis-à-vis des bords de la au moins seconde poulie d'entrainement (20-2) du second axe d'entrainement (24), à une distance telle que l'axe de sécurité (89) ne se trouve entrainé que lorsque le au moins un moyen d'entrainement déborde sur l'un des bords de la poulie d'entrainement (20-2), et **en ce qu'**un détecteur (88) est disposé en contact avec l'une des extrémités de l'axe de sécurité (89), de manière à détecter sa mise en mouvement.

7. Treuil selon la revendication 5, **caractérisé en ce que** la détection de la rotation de l'axe de sécurité (89) par le détecteur (88) conduit à l'arrêt de l'alimentation du moteur (11) ou la création d'un signal d'alarme.

8. Treuil selon l'une ou l'autre des revendications précédentes, **caractérisé en ce qu'**un le au moins un moyen de traction est associée à un ou plusieurs conducteurs électriques, ou comprend un conducteur électrique.

9. Treuil selon la revendication 7, **caractérisé en ce que** les conducteurs électriques sont des conducteurs plats associés au moyen de traction par collage, soudage ou extrusion, et **en ce que** les première (21-2) et seconde (20-2) poulies d'entrainement comportent chacune un zone d'entrainement (E) et au moins une zone de passage (P) adaptée au passage desdits conducteurs électriques.

10. Treuil selon l'une des revendications précédentes, **caractérisé en ce qu'**il comporte en outre un dévidoir (2), fixé sur les supports (15-2), (15-1) du treuil (1), et permettant d'organiser le ou les moyens de traction (72) en boucles (B).

11. Treuil selon la revendication 10, **caractérisées en ce que** le dévidoir (2) comporte au moins un premier jeu de poulies (46-1 à 46-4) montées libres en rotation sur un axe support (45) et au moins un second jeu de poulies (51, 52, 53, 54) solidaires d'un axe relai (43), parallèle à l'axe support (45), où les poulies (46-1 à 46-4) dudit premier jeu de poulies sont chacune entraînées par une courroie de transmission (75-1), (75-2), (75-3), (75-4), reliée à chacune des poulies (51, 52, 53, 54) du second jeu de poulies, **en ce que** l'axe relai (43) est entrainé en rotation par le second axe d'entrainement (24), **en ce que** les poulies entraînées par l'axe relai (43) ont des diamètres différents les uns des autres, et **en ce que** les poulies montées libres en rotation sur l'axe support (45) ont toutes lemême diamètre.

12. Treuil selon la revendication 11, **caractérisé en ce que** les poulies montées libres en rotation sur l'axe support (45) comportent chacune une zone en contact avec le au moins un moyen de traction (72) et une zone en contact avec une des courroies de transmission (75-1), (75-2), (75-3), (75-4).

13. Treuil selon l'une des revendications 11 ou 12, **caractérisé en ce que** l'axe relai (43) comporte un jeu de 4 poulies ((51, 52, 53, 54), dont le diamètre de chaque poulie est réduit par rapport à celui de la poulie contiguë, de manière à ce que la vitesse linéaire de chaque poulie soit réduite d'un quart par rapport à la vitesse linéaire de la poulie précédente.

14. Treuil selon la revendication 10, **caractérisé en ce que** le dévidoir (2) comporte une paire de courroies crantées parallèles (75-5), entraînées par le second axe (24) d'entrainement du treuil (1) au moyen d'un système de transmission comprenant des poulies de transmission (49-2), (49-3) et une courroie de transmission (75-6), ladite paire de courroies crantées (75-5) coopérant avec un cylindre (49) tournant librement sur un axe (69), et sur lequel s'enroule le moyen de traction (72) lors du levage d'une charge (Z).

15. Treuil selon la revendication 10, **caractérisé en ce que** le dévidoir (2) comporte une paire de courroies crantées parallèles (75-5), entraînées par le second axe (24) d'entrainement du treuil (1) au moyen d'un système de transmission comprenant des poulies de transmission (49-2), (49-3) et une courroie de transmission (75-6), **en ce qu'**il comprend plusieurs cylindres mobiles (49), (49-11), (49-12) et plusieurs cylindres fixes (49-13), (49-14), ladite paire de courroies crantées (75-5) coopérant avec les cylindres mobiles (49), (49-11), (49-12) et fixes (49-13), (49-14) pour les mettre en rotation, où le moyen de traction (72) s'enroule autour desdits cylindres mobiles (49), (49-11), (49-12) et fixes (49-13), (49-14).

16. Treuil selon la revendication 10, **caractérisé en ce que** le dévidoir (2) comporte une paire de courroies crantées parallèles (75-5), entraînées par le second axe (24) d'entrainement du treuil (1) au moyen d'un système de transmission comprenant des poulies de transmission (49-2), (49-3), **en ce qu'**il comprend plusieurs cylindres mobiles (49), (49-11), (49-12) et plusieurs cylindres fixes (49-13), (49-14), ladite paire de courroies crantées (75-5) coopérant avec les cylindres mobiles (49), (49-11), (49-12) et fixes (49-13), (49-14) pour les mettre en rotation, où le au moins un moyen de traction (72) s'enroule autour desdits cylindres mobiles (49), (49-11), (49-12) et fixes (49-13), (49-14), le dévidoir (2) comprenant en outre une ou plusieurs poulies de renvoi (49-4) permettant d'enrouler et de dérouler un câble indépendant (90-1) de manière synchrone avec le au moins un moyen de traction (72).

17. Treuil selon la revendication 10, **caractérisé en ce que** le dévidoir (2) comporte une paire de courroies crantées parallèles (75-5) entrainées par une courroie de transmission (75-7) au moyen d'un système de transmission comprenant des poulies de transmission (49-1), **en ce qu'**il comprend plusieurs cylindres mobiles (49), (49-11), (49-12) et plusieurs cylindres fixes (49-13), (49-14), ladite paire de courroies crantées (75-5) coopérant avec les cylindres mobiles (49), (49-11), (49-12) et fixes (49-13), (49-14) pour les mettre en rotation, où le au moins un moyen de traction (72) s'enroule autour desdits cylindres mobiles (49), (49-11), (49-12) et fixes (49-13), (49-14), et où ladite courroie de transmission (75-7) est entraînée par un ou plusieurs moyens de traction (49-32, 49-33, 49-34) indépendants du treuil (1), le dévidoir (2) permettant ainsi le stockage d'un ou plusieurs câbles indépendants (90-1) indépendamment du treuil (1).

18. Treuil selon les revendications 16 ou 17, **caractérisé en ce que** le dévidoir (2) comporte en outre un jeu de poulies libres (46-1 ; 46-2 ; 46-3 ; 46-4 ; 49 ; 49-11 ; 49-12 ; 49-13 ; 49-14) exclusivement dédiées à l'enroulement d'un câble indépendant (90-1), la surface desdites poulies libres pouvant être totalement lisse ou bien comporter deux zones contiguës, l'une étant lisse et l'autre crantée.

19. Dévidoir utilisé pour le stockage d'une ou plusieurs courroies de traction (72) entrainées par un treuil, comprenant au moins une courroie crantée (75-5) entraînée par une courroie de transmission (75-6, 75-7), ladite au moins une courroie crantée (75-5) coopérant avec au moins un cylindre mobile (49) (49-11), (49-12), et optionnellement au moins un cylindre fixe (49-13), (49-14) tournant librement sur un axe (69, 69-11, 69-12, 69-13), ledit dévidoir (2) comprenant optionnellement une ou plusieurs poulies de renvoi (49-4) permettant d'enrouler et de dérouler un câble indépendant (90-1) desdites courroies de traction (72), ladite courroie de transmission (75-6, 75-7) étant entrainée par le treuil utilisé pour la traction desdites courroies de traction (72), ou par un ou plusieurs moyens de traction (49-32, 49-33, 49-34) indépendants dudit treuil, **caractérisé en ce que** lesdits au moins un cylindre mobile (49) (49-11), (49-12), et lesdits au moins un cylindre fixe (49-13), (49-14) sont configurés de sorte à enrouler lesdites une ou plusieurs courroies de traction (72) et/ou ledit câble indépendant (90-1) dans le dévidoir (2) de manière synchrone avec ledit treuil.

**20.** Courroie crantée, **caractérisée en ce qu'**elle comprend un ou plusieurs conducteurs électriques, un moyen de branchement à une source électrique, disposé à l'une de ses extrémités, un moyen de connexion électrique disposée à son extrémité opposée, et un moyen d'attache à une charge à lever (Z).

**21.** Courroie selon la revendication 20, **caractérisée en ce qu'**elle est utilisée en combinaison avec un treuil (1) tel que décrit dans les revendications 1 à 18.

1D + 1D = 2D

1D + 1D + 1D = 3D

Figure 1

17-2

Dévidoir

20-2

21-2

75

17-1

72

41-2

17-12

42-2

Figure 2a

Z

15-2    20-2    20-3    75

24

72-2

17-2

14

21-3

21-2

41-2    35

42-2

29

Z

Figure 2b

Figure 2c

Figure 3b

Figure 3c

Figure 4a

Figure 4b

Figure 5

Figure 6

A1  A2  A3  A4

1  2

72  72  72  72  72

Z

EP 3 693 324 A1

EP 3 693 324 A1

Figure 7a

Figure 7b

Détail C

49-1  75-5

49-3

75-6
49-2

C

1

72   72   72   72   72

z

Figure 7c

EP 3 693 324 A1

Figure 7d

EP 3 693 324 A1

Figure 7e

Figure 7f

Figure 7h

Figure 7g

EP 3 693 324 A1

Figure F7i

Figure F7j

72

72

72

72

72

Z

1

49-3

49-14

49-13

49

49-12

69-12

49-11

69-11

75-5

75-5

49-1

72

90

90

Figure 8

49,
49-11, 49-12,
49-13, 49-14

P

E

P

20-1

(46-1) - (46-4)
49 (49-11) - (49-14)

90

72

90

Figure 9

20-2

(46-1) - (46-4)
49 (49-11) - (49-14)

90-1

(46-1) - (46-4)
49 (49-11) - (49-14)

90-1

Figure 9a

(46-1) - (46-4)

49 (49-11) - (49-14)

90-1

90-1

Figure 9b

Côté treuil

Côté charge

Fig 10b

Fig 10a

72 80 80-1

R1 R2 R3 CD Z

Figure 11

Figure 11a

Europäisches
Patentamt

European
Patent Office

Office européen
des brevets

## RAPPORT DE RECHERCHE EUROPEENNE

Numéro de la demande

EP 20 15 5861

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 248 756 A1 (ELECTRONIC THEATRE CONTROLS [US]) 10 novembre 2010 (2010-11-10) | 19 | INV. B66D3/08 A63J1/02 |
| Y | * alinéa [0022] * | 1-10,21 | F16G1/28 |
| A | * alinéa [0024] * * figures * ----- | 11-18 | B66D1/20 B66D1/60 D07B1/14 |
| Y | US 2016/045837 A1 (SHATZKIN CHARLES B [US] ET AL) 18 février 2016 (2016-02-18) * alinéa [0025] * * alinéa [0028] * * alinéa [0033] - alinéa [0034] * * alinéa [0046] * * figures * ----- | 1-10 | B66D1/74 |
| X | EP 1 760 028 A1 (ELEX ITALIA S R L [IT]) 7 mars 2007 (2007-03-07) | 20 | |
| Y | * alinéa [0011] * * alinéa [0015] - alinéa [0019] * * figure 4 * ----- | 8,21 | |
| A,D | DE 196 13 037 A1 (H & B METALLTECHNIK HUELSERMAN [DE]) 2 octobre 1997 (1997-10-02) * colonne 2, ligne 62 * * figures * ----- | 1 | DOMAINES TECHNIQUES RECHERCHES (IPC) B66D A63J F16P F16G D07B |
| Y | WO 2013/075751 A1 (KONE CORP [FI]; PETRIC PETER [CH]; HOERLER MARCO [CH]) 30 mai 2013 (2013-05-30) | 8,9 | |
| A | * page 6, ligne 6 - page 8, ligne 13 * * figures * ----- | 1 | |

Le présent rapport a été établi pour toutes les revendications

| Lieu de la recherche | Date d'achèvement de la recherche | Examinateur |
|---|---|---|
| La Haye | 6 juillet 2020 | Özsoy, Sevda |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 15 5861

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-07-2020

| Document brevet cité au rapport de recherche | | Date de publication | Membre(s) de la famille de brevet(s) | | Date de publication |
|---|---|---|---|---|---|
| EP 2248756 | A1 | 10-11-2010 | CA | 2650670 A1 | 08-11-2007 |
| | | | EP | 2013133 A1 | 14-01-2009 |
| | | | EP | 2248756 A1 | 10-11-2010 |
| | | | US | 2007278046 A1 | 06-12-2007 |
| | | | US | 2010301292 A1 | 02-12-2010 |
| | | | US | 2012025157 A1 | 02-02-2012 |
| | | | WO | 2007127453 A1 | 08-11-2007 |
| US 2016045837 | A1 | 18-02-2016 | AUCUN | | |
| EP 1760028 | A1 | 07-03-2007 | AUCUN | | |
| DE 19613037 | A1 | 02-10-1997 | AUCUN | | |
| WO 2013075751 | A1 | 30-05-2013 | AUCUN | | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2625131 A
- DE 19613037
- EP 2157334 A